(19) Europäisches Patentamt
European Patent Office
Office européen des brevets

(11) **EP 4 404 004 A1**

(12) **EUROPEAN PATENT APPLICATION**
published in accordance with Art. 153(4) EPC

(43) Date of publication:
**24.07.2024 Bulletin 2024/30**

(21) Application number: **21957520.6**

(22) Date of filing: **16.09.2021**

(51) International Patent Classification (IPC):
**G03H 1/08** (2006.01)     **G01B 11/24** (2006.01)
**G01N 21/45** (2006.01)     **G01N 21/88** (2006.01)

(52) Cooperative Patent Classification (CPC):
**G01B 11/24; G01N 21/45; G01N 21/88; G03H 1/08**

(86) International application number:
**PCT/JP2021/034111**

(87) International publication number:
**WO 2023/042339 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: Otsuka Electronics Co., Ltd.
**Hirakata-shi, Osaka 573-1132 (JP)**

(72) Inventors:
• **SHIMODA, Kensaku**
**Hirakata-shi, Osaka 573-1132 (JP)**
• **MIZUGUCHI, Tsutomu**
**Hirakata-shi, Osaka 573-1132 (JP)**
• **SANO, Hiroyuki**
**Hirakata-shi, Osaka 573-1132 (JP)**

(74) Representative: Hoffmann Eitle
**Patent- und Rechtsanwälte PartmbB
Arabellastraße 30
81925 München (DE)**

(54) **OPTICAL MEASUREMENT SYSTEM AND OPTICAL MEASUREMENT METHOD**

(57)     An optical measurement system includes a first light source that generates near infrared rays, a silicon-based image sensor, and an optical system including a beam splitter that divides light from the first light source into first light and second light. The optical system records with the image sensor, a first hologram resulting from modulation with second light, of light obtained by illumination of a sample with the first light, the second light being diverging light.

FIG.1

EP 4 404 004 A1

**Description**

Optical Measurement System and Optical Measurement Method

TECHNICAL FIELD

The present invention relates to an optical measurement system and an optical measurement method that make use of digital holography.

BACKGROUND ART

A technique to inspect a sample such as a silicon wafer for a possible defect therein has conventionally been available.

For example, Japanese Patent Laying-Open No. 2011-033449 (PTL 1) discloses a technique to inspect a wafer for an internal defect and front and rear surface defects therein with the use of transmitted images obtained by irradiation of the wafer with infrared light. An apparatus that realizes wafer internal defect inspection with infrared light has been known (see NPL 1 or the like).

Digital holography has been proposed and put into practical use as a method of more accurate measurement of a geometry of a sample. Digital holography is a technique for measuring a geometry or the like of a sample by obtaining a shape of a wave front of an object beam by observing interference fringes produced as a result of superimposition on a reference beam, of the object beam produced as a result of illumination of the sample with light.

For example, WO2012/005315 (PTL 2) discloses a configuration capable of measuring a geometry of a sample by adoption of a reflection optical system. WO2020/045584 (PTL 3) discloses a configuration including a cube-type beam coupler, the configuration readily realizing recording of a large numerical aperture and reflection-type illumination.

CITATION LIST

PATENT LITERATURE

 PTL 1: Japanese Patent Laying-Open No. 2011-033449
 PTL 2: WO2012/005315
 PTL 3: WO2020/045584

NPL 1: TORAY, Wafer internal defect inspection system "INSPECTRA® IR" Series [online], [Date of Search 2021.09.06], Internet <URL:https://www.toray-eng.com/tasmit/products/measuring/mea_020.html>

SUMMARY OF INVENTION

TECHNICAL PROBLEM

The technique disclosed in Japanese Patent Laying-Open No. 2011-033449 (PTL 1) described above adopts a measurement method based on a difference in transmittance of infrared light, and it is difficult to detect a defect on the nm order therewith. For wafer internal defect inspection (NPL 1) described above as well, the measurement method based on the difference in transmittance of infrared light is adopted, and it is difficult to detect a defect on the nm order therewith.

In an attempt to reconstruct an image by illumination of a sample with infrared rays in known digital holography (see PTL 2, PTL 3, and the like), it is difficult to increase a signal-to-noise ratio (SN ratio).

One object of the present invention is to provide a technique that allows measurement of a sample by irradiation with near infrared rays. Another object of the present invention is to provide a technique that allows improvement in SN ratio in measurement.

SOLUTION TO PROBLEM

An optical measurement system according to one aspect of the present invention includes a first light source configured to generate near infrared rays, a silicon-based image sensor, and an optical system including a beam splitter configured to divide light from the first light source into first light and second light. The optical system is configured to record with the image sensor, a first hologram resulting from modulation with the second light, of light obtained by illumination of a sample with the first light, the second light being diverging light.

The optical system may generate the first hologram from transmitted light obtained by illumination of the sample with the first light. In the optical system, a second hologram may be recorded from transmitted light obtained by illumination with the first light, of a substrate instead of the sample, the substrate being included in the sample and not being an object to be measured.

The optical system may generate the first hologram from reflected light obtained by illumination of the sample with the first light. In the optical system, a second hologram may be recorded from reflected light obtained by illumination with the first light, of a reference plane instead of the sample.

The optical measurement system may further include a second light source configured to generate visible light and a processing apparatus. The optical system may be switchable between a first configuration in which the first hologram is generated from transmitted light obtained by illumination of the sample with the first light and a second configuration in which the first hologram is generated from reflected light obtained by illumination of the sample with the first light. The processing apparatus may measure an internal structure of the sample based on the first hologram recorded when the first light source is combined with the first configuration of the optical system and measure a surface geometry of the sample based on the first hologram recorded when the second light source is combined with the second configuration of the optical system.

The optical system may be an off-axis holography optical system.

The optical system may include a restriction mechanism configured to restrict a size of a range where the sample is illuminated with the first light such that a component corresponding to the first light is not superimposed on a component other than the component corresponding to the first light in a spatial frequency domain of a hologram recorded with the image sensor.

According to another aspect of the present invention, an optical measurement method using an optical system including a beam splitter configured to divide light from a first light source configured to generate near infrared rays into first light and second light is provided. The optical measurement method includes recording with a silicon-based image sensor, a first hologram resulting from modulation with the second light, of light obtained by illumination of a sample with the first light, the second light being diverging light and recording with the image sensor, a second hologram resulting from modulation of the first light with the second light while there is no sample.

An optical measurement system according to yet another aspect of the present invention includes a light source, an optical system including a beam splitter configured to divide light from the light source into first light and second light, an image sensor configured to record a hologram generated by the optical system, and a processing apparatus configured to calculate an amplitude phase distribution at a sample plane based on a first hologram and a second hologram, the sample plane being a plane of interest regarding a sample, the first hologram resulting from modulation with the second light, of light obtained by illumination of the sample with the first light, the second hologram resulting from modulation of the first light with the second light while there is no sample. The optical system includes a mechanism configured to change a manner of illumination with the first light. The processing apparatus is configured to calculate a composed amplitude phase distribution by summing the amplitude phase distribution calculated for each manner of illumination with the first light, with the amplitude phase distribution being maintained as a complex number.

The mechanism may change an angle of illumination with the first light.

The mechanism may change an azimuth angle while an angle of incidence of the first light is constant.

The optical system may include a restriction mechanism configured to restrict a size of a range where the sample is illuminated with the first light such that a component corresponding to the first light is not superimposed on a component other than the component corresponding to the first light in a spatial frequency domain of a hologram recorded with the image sensor.

The processing apparatus may provide a user interface screen configured to receive setting of the number of manners of illumination with the first light.

According to yet another aspect of the present invention, an optical measurement method using an optical system including a beam splitter configured to divide light from a light source into first light and second light is provided. The optical measurement method includes recording with an image sensor, a first hologram resulting from modulation with the second light, of light obtained by illumination of a sample with the first light, recording with the image sensor, a second hologram resulting from modulation of the first light with the second light while there is no sample, changing a manner of illumination with the first light, calculating an amplitude phase distribution at a sample plane which is a plane of interest regarding the sample, based on the first hologram and the second hologram for each manner of illumination with the first light, and calculating a composed amplitude phase distribution by summing amplitude phase distributions calculated for respective manners of illumination with the first light, with the amplitude phase distributions being maintained as complex numbers.

ADVANTAGEOUS EFFECTS OF INVENTION

According to one embodiment of the present invention, a technique that allows measurement of a sample by illumination with near infrared rays can be realized. According to another embodiment of the present invention, a technique that allows improvement in SN ratio in measurement can be realized.

BRIEF DESCRIPTION OF DRAWINGS

Fig. 1 is a schematic diagram showing an exemplary configuration of an optical measurement system according to a first embodiment.
Fig. 2 is a schematic diagram showing an exemplary detailed configuration of a measurement optical system in the optical measurement system according to the first embodiment.
Fig. 3 is a diagram for illustrating an effect obtained by changing a manner of illumination with illumination light in the optical measurement system according to the present embodiment.
Fig. 4 is a diagram for illustrating a state of incidence of an object beam and an off-axis reference beam on a recording surface of an image sensor.
Fig. 5 is a diagram for illustrating relation of a sample and an off-axis reference beam R in the optical measurement system according to the present embodiment.
Fig. 6 is a diagram for illustrating relation of a spatial frequency band in connection with an off-axis hologram in the optical measurement system according to the present embodiment.
Fig. 7 is a flowchart showing a processing procedure in a method of measuring a surface geometry with the optical measurement system according to the first embodiment.
Fig. 8 is a flowchart showing a processing procedure in a method of measuring an internal structure with the optical measurement system according to the first embodiment.
Fig. 9 is a schematic diagram showing an exemplary configuration of an optical measurement system according to a second embodiment.
Fig. 10 is a flowchart showing a processing procedure in a method of measuring a surface geometry with the optical measurement system according to the second embodiment.
Fig. 11 is a flowchart showing a processing procedure in a method of measuring an internal structure with the optical measurement system according to the second embodiment.
Fig. 12 is a schematic diagram showing an exemplary hardware configuration of a processing apparatus included in the optical measurement system according to the present embodiment.
Fig. 13 is a schematic diagram showing an exemplary functional configuration of the processing apparatus included in the optical measurement system according to the present embodiment.
Fig. 14 is a schematic diagram showing an exemplary user interface screen provided in the optical measurement system according to the present embodiment.
Fig. 15 is a diagram showing exemplary measurement of the surface geometry with the optical measurement system according to the present embodiment.
Fig. 16 is a diagram showing exemplary measurement of the internal structure with the optical measurement system according to the present embodiment.
Fig. 17 is a schematic diagram showing an exemplary combined configuration of the optical measurement system according to the present embodiment.

DESCRIPTION OF EMBODIMENTS

An embodiment of the present invention will be described in detail with reference to the drawings. The same or corresponding elements in the drawings have the same reference characters allotted and description thereof will not be repeated.

<A. Optical Measurement System>

Initially, an optical measurement system according to the present embodiment makes use of digital holography where diverging light such as a point light source is used as a reference beam. In the present embodiment, an exemplary configuration based on lensless digital holography where there is no lens between a sample and an image sensor will be described.
In the description below, an optical measurement system where an off-axis holography optical system is adopted will mainly be described. In a first embodiment, a transmission optical system will be illustrated and a reflection optical system will be illustrated in a second embodiment. "The present embodiment" may encompass the first embodiment and the second embodiment.

The optical measurement system according to the present embodiment measures a surface geometry and an internal structure of a sample. Furthermore, the optical measurement system according to the present embodiment can also measure an index of refraction of the sample. Though the optical measurement system can conduct measurement of any sample, it can be used for inspection of a surface of a semiconductor, measurement of a thickness or a distribution of indices of refraction of a film product, evaluation of surface roughness or an undulation of a precisely worked surface, and observation of a biological cell or evaluation of a shape thereof.

<B. First Embodiment: Transmission Optical System>

(b1: Optical System)

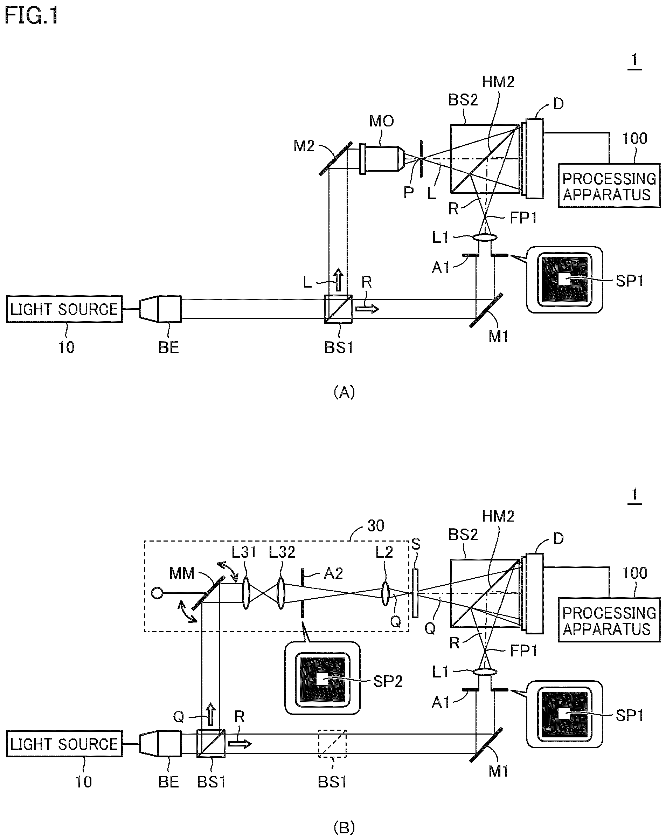

Fig. 1 is a schematic diagram showing an exemplary configuration of an optical measurement system 1 according to the first embodiment. Fig. 1 (A) shows an optical system in recording of an in-line reference beam and Fig. 1 (B) shows an optical system in recording of an object beam. Optical measurement system 1 can configure the optical systems shown in Fig. 1 (A) and (B).

The optical system shown in Fig. 1 (A) falls under an optical system for recording an off-axis hologram $I_{LR}$ resulting from modulation of an in-line reference beam L with an off-axis reference beam R, in-line reference beam L serving as the reference of recording.

The optical system shown in Fig. 1 (B) falls under an optical system for recording an off-axis hologram $I_{OR}$ resulting from modulation with off-axis reference beam R, of an object beam O obtained by illumination of a sample S with illumination light Q, off-axis reference beam R being diverging light. More specifically, the optical system shown in Fig. 1 (B) generates off-axis hologram $I_{OR}$ (object beam hologram: first hologram) from transmitted light obtained by illumination of sample S with illumination light Q. An illumination light profile is also obtained with the use of the optical system shown in Fig. 1 (B). In this case, sample S is not arranged.

A processing apparatus 100 measures a surface geometry, an internal structure, and the like of sample S based on off-axis hologram $I_{LR}$ and off-axis hologram $I_{QR}$.

Referring to Fig. 1 (A), optical measurement system 1 includes a light source 10, a beam expander BE, beam splitters BS1 and BS2, mirrors M1 and M2, an objective lens MO, a pinhole P, a lens L1, a mask A1, and an image sensor D as the optical system for recording off-axis hologram $I_{LR}$.

Light source 10 is implemented by laser or the like, and generates coherent light. In the optical measurement system according to the present embodiment, a band of wavelength of light generated by light source 10 may be different depending on what is measured (measurement of the surface geometry or measurement of the internal structure).

More specifically, in measurement of the surface geometry of sample S, light source 10 that generates visible light may be employed. Specifically, light source 10 that generates light having a component in at least a part of a wavelength range from 380 to 780 nm is employed. For example, a visible light source having a peak wavelength at 532 nm may be employed.

In measurement of the internal structure of sample S, on the other hand, light source 10 that generates near infrared rays may be employed. Specifically, light source 10 that generates light having a component in at least a part of a wavelength range from 1000 to 1200 nm is employed. For example, a near infrared light source having a peak wavelength at 1030 nm may be employed.

The optical measurement system according to the present embodiment is configured such that a type of light source 10 can freely be changed.

Image sensor D records a hologram generated by the optical system shown in Fig. 1 (A) and (B). A general charge-coupled device (CCD) image sensor or a complementary MOS (CMOS) image sensor is employed as image sensor D. These image sensors are each a semiconductor integrated circuit configured with electronic circuitry formed on a silicon substrate. In other words, a silicon-based image sensor is employed in the optical measurement system according to the present embodiment. The silicon-based image sensor has light reception sensitivity mainly in a visible light band, and it has light reception sensitivity also in a near infrared band in addition to visible light.

Beam expander BE expands a cross-sectional diameter of light from light source 10 to a predetermined size. Beam splitter BS1 divides light expanded by beam expander BE into two light beams. One light beam divided by beam splitter BS1 corresponds to in-line reference beam L (first light) and the other light beam corresponds to off-axis reference beam R (second light).

In-line reference beam L is reflected by mirror M2 and guided to beam splitter BS2. Furthermore, in-line reference beam L passes through a half mirror HM2 of beam splitter BS2 and is guided to image sensor D. Objective lens MO and pinhole P are arranged between mirror M2 and beam splitter BS2. In-line reference beam L is condensed by objective lens MO and narrowed in cross-sectional diameter by pinhole P. Pinhole P corresponds to a position of a point light source of in-line reference beam L. Objective lens MO and pinhole P implement the point light source of in-line reference beam L.

Off-axis reference beam R is reflected by mirror M1 and guided to beam splitter BS2. Furthermore, off-axis reference beam R is reflected by half mirror HM2 of beam splitter BS2 and guided to image sensor D. Mask A1 and lens L1 are arranged between mirror M1 and beam splitter BS2. Off-axis reference beam R passes through mask A1 and it is thereafter condensed by lens L1. A light condensation point FP1 which is a position of condensation of light corresponds to the position of the point light source of off-axis reference beam R.

Mask A1 is provided with an opening pattern SP1 in an area through which off-axis reference beam R passes. An image corresponding to opening pattern SP1 in mask A1 is formed on image sensor D. A size of opening pattern SP1 in mask A1 is determined such that an area out of a surface of beam splitter BS2 on a side of image sensor D is not illuminated with off-axis reference beam R that passes through mask A1. By thus determining the size of opening pattern SP1 in mask A1, generation of noise due to undue interference is suppressed.

Off-axis reference beam R is adjusted such that in-line reference beam L can be recorded as a hologram.

In-line reference beam L and off-axis reference beam R are superimposed on each other by beam splitter BS2 arranged in a stage preceding image sensor D through optical paths as described above. In other words, image sensor D obtains off-axis hologram $I_{LR}$ resulting from modulation of in-line reference beam L with off-axis reference beam R which is diverging light.

Beam splitter BS2 is preferably formed in a cubic shape so as to facilitate arrangement thereof in the stage preceding image sensor D. The point light source of in-line reference beam L and the point light source of off-axis reference beam R are arranged in optical proximity to each other owing to beam splitter BS2.

Referring to Fig. 1 (B), optical measurement system 1 includes a measurement optical system 30 instead of mirror M2, objective lens MO, and pinhole P, as the optical system for recording off-axis hologram $I_{OR}$.

Measurement optical system 30 includes a mechanism that changes a manner of illumination with illumination light and a mechanism that restricts an illuminated range. More specifically, measurement optical system 30 includes a movable mirror MM, lenses L2, L31, and L32, and a mask A2.

Sample S to be measured is arranged between measurement optical system 30 and beam splitter BS2.

When a distance necessary for measurement optical system 30 is longer than a distance necessary for objective lens MO and pinhole P in the optical system shown in Fig. 1 (A), beam splitter BS1 is arranged at a position closer to light source 10.

Light outputted from one side of beam splitter BS1 is used as illumination light Q (first light) for illumination of sample S.

The optical measurement system according to the present embodiment includes the mechanism that changes the manner of illumination with illumination light Q. Fig. 1 (B) shows movable mirror MM by way of example of such a mechanism. More specifically, as movable mirror MM rotates, the manner of illumination with illumination light Q is changed. In this case, change in manner of illumination with illumination light Q means change in angle of illumination with illumination light Q. An angle of illumination with illumination light Q is also referred to as an "illumination angle" below.

Off-axis reference beam R (second light) outputted from the other side of beam splitter BS1 is guided to image sensor D through an optical path the same as in Fig. 1 (A).

Object beam O (that is, light that has passed through sample S) obtained by illumination of sample S with illumination light Q passes through half mirror HM2 of beam splitter BS2 and is guided to image sensor D. Lenses L31 and L32, mask A2, and lens L2 are arranged in this order between movable mirror MM and beam splitter BS2.

Illumination light Q is condensed by lenses L31 and L32 and passes through mask A2. Illumination light Q that passes through mask A2 is further condensed by lens L2 and forms an image on sample S.

Mask A2 corresponds to a restriction mechanism that restricts a range of illumination of sample S with illumination light Q to a predetermined range. Such a mask A2 that an opening pattern SP2 corresponding to a predetermined range is formed in a shielding member may be employed as an exemplary restriction mechanism. Illumination light Q passes through an area corresponding to opening pattern SP2.

An image of opening pattern SP2 in mask A2 passes through lens L2 and is formed on sample S. In other words, of light with which mask A2 is illuminated, only light in a portion corresponding to opening pattern SP2 passes through mask A2. The range of illumination of sample S with illumination light Q that passes through mask A2 can thus be restricted. By restriction of the range of illumination with illumination light Q, unwanted light can be reduced and measurement accuracy can be enhanced.

Since the range of illumination may vary depending on a thickness of sample S in optical measurement system 1, for addressing such variation, opening pattern SP2 in mask A2 is changed or a position of lens L2 for forming an image of illumination light Q on sample S is changed as necessary.

The configuration for illumination of mask A2 with illumination light Q is not limited to the configuration shown in Fig. 1 (B), and any configuration can be adopted.

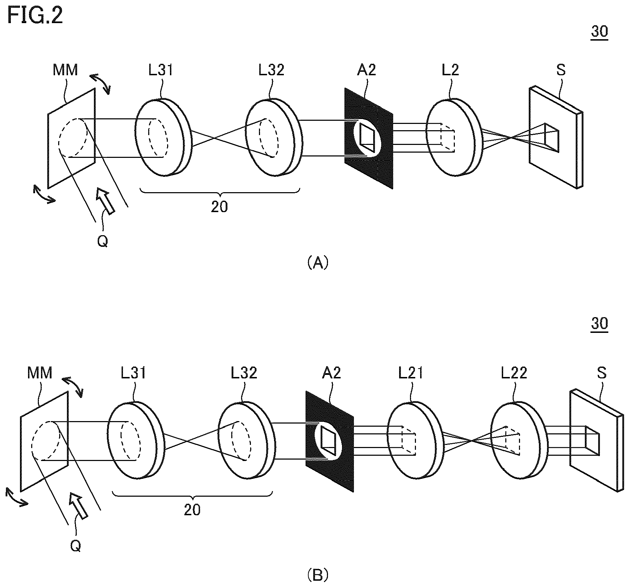

Fig. 2 is a schematic diagram showing an exemplary detailed configuration of measurement optical system 30 in optical measurement system 1 according to the first embodiment.

Referring to Fig. 2 (A), illumination light Q sequentially passes through movable mirror MM, lens L31, lens L32, mask A2, and lens L2 and forms an image on sample S. Lens L31 and lens L32 implement an image forming optical system 20 such as a 4f optical system.

Illumination light Q incident on movable mirror MM is reflected in a direction corresponding to an angle (orientation) of movable mirror MM and incident on image forming optical system 20. Illumination light Q then propagates in a direction of reflection by movable mirror MM, passes through opening pattern SP2 in mask A2, and forms an image on sample S in a shape the same as opening pattern SP2.

Fig. 2 (B) shows an exemplary optical system in an example where illumination light Q for illumination of sample S is parallel light. More specifically, in the optical system shown in Fig. 2 (B), a lens L21 and a lens L22 are arranged instead of lens L2 in the optical system shown in Fig. 2 (A). Lens L21 and lens L22 are each a condenser lens. The lenses are combined so that sample S is illuminated with illumination light Q that has passed through mask A2 while it remains as parallel light.

The optical system arranged in stages preceding and subsequent to mask A2 is not limited to the optical system shown in Fig. 2 (A) and (B). Any configuration that allows projection of reflected light from movable mirror MM to cover opening pattern SP2 in mask A2 may be adopted as the optical system to be arranged in the stage preceding mask A2. Any configuration that allows formation of an image of opening pattern SP2 in mask A2 on sample S may be adopted as the optical system to be arranged in the stage subsequent to mask A2. So long as such a requirement is satisfied, the number of lenses and a type of the lens can freely be designed. Without being limited to the lens, any optical device may be used and implemented.

When movable mirror MM and mask A2 are arranged in optical proximity, lenses L31 and L32 do not have to be provided.

(b2: Measurement Processing)

Basic processing for measuring a geometry of sample S in optical measurement system 1 according to the first embodiment will now be described. In the description below, a light receiving surface of image sensor D is defined as a "recording surface" and an intersection between the recording surface and a central optical axis of beam splitter BS2 is defined as the "origin". A direction of the optical axis is defined as a z axis and two axes orthogonal to the z axis are defined as an x axis and a y axis, respectively. In other words, the optical axis is perpendicular to the recording surface of image sensor D and the x axis and the y axis are in parallel to the recording surface of image sensor D, which is also similar in another embodiment.

Distributions of object beam O, off-axis reference beam R, and in-line reference beam L at the recording surface of image sensor D can be expressed in general expressions such as expressions (1) to (3) below.

$$L(x, y) = L_0(x, y)\exp[i(\varphi_L(x, y) - \omega t)] \qquad \cdots (1)$$

$$O(x, y) = O_0(x, y)\exp[i(\varphi_O(x, y) - \omega t)] \qquad \cdots (2)$$

$$R(x, y) = R_0(x, y)\exp[i(\varphi_R(x, y) - \omega t)] \qquad \cdots (3)$$

In-line reference beam L, object beam O, and off-axis reference beam R are beams having angular frequencies ω coherent to one another. Off-axis hologram $I_{LR}$ recorded in the optical system shown in Fig. 1 (A) is calculated as in an expression (4) below, as light intensity of synthesized light of light expressed in the expression (3) and light expressed in the expression (1). Off-axis hologram $I_{OR}$ recorded in the optical system shown in Fig. 1 (B) is calculated as in an expression (5) below, as light intensity of synthesized light of light expressed in the expression (2) and light expressed in the expression (3).

$$I_{LR}(x, y) = |L + R|^2 = L_0^2 + R_0^2 + L_0 R_0 \exp[i(\varphi_L - \varphi_R)] + L_0 R_0 \exp[-i(\varphi_L - \varphi_R)] \qquad \cdots (4)$$

$$I_{OR}(x, y) = |O + R|^2 = O_0^2 + R_0^2 + O_0 R_0 \exp[i(\varphi_O - \varphi_R)] + O_0 R_0 \exp[-i(\varphi_O - \varphi_R)] \qquad \cdots (5)$$

Since off-axis hologram $I_{LR}$ is invariable regardless of a state of object beam O, it should only be recorded at least once.

In the expressions (4) and (5), the first term on the right side corresponds to an light intensity component of object beam O or in-line reference beam L, the second term on the right side corresponds to a light intensity component of off-axis reference beam R, the third term on the right side corresponds to a direct image component produced as a result of modulation of object beam O with off-axis reference beam R, and the fourth term on the right side corresponds to a conjugate image component.

As a result of application of a bandpass filter to the expressions (4) and (5) to extract the direct image component in the third term, a complex amplitude off-axis hologram $J_{LR}$ which is a record of in-line reference beam L and a complex amplitude off-axis hologram $J_{OR}$ which is a record of object beam O are calculated as in an expression (6) and an expression (7) below, respectively.

$$J_{LR}(x, y) = L_0 R_0 \exp[i(\varphi_L - \varphi_R)] \qquad \cdots (6)$$

$$J_{OR}(x, y) = O_0 R_0 \exp[i(\varphi_O - \varphi_R)] \qquad \cdots (7)$$

As a result of division of the expression (7) by the expression (6), a component of off-axis reference beam R is eliminated and a complex amplitude in-line hologram $J_{OL}$ with in-line reference beam L being defined as the reference is calculated as in an expression (8) below.

$$J_{OL}(x, y) = \frac{O_0}{L_0} \exp[i(\varphi_O - \varphi_L)] \qquad \cdots (8)$$

A component of in-line reference beam L can be eliminated by multiplying complex amplitude in-line hologram $J_{OL}$ shown in the expression (8) by in-line reference beam L. A method described in WO2020/045584 (PTL 3) can be adopted as a method of calculating in-line reference beam L. Through processing above, an object beam hologram U as shown in an expression (9) below is obtained.

$$U(x, y) = J_{OL}L = O_0 \exp\left(i\varphi_O(x, y)\right) \qquad \cdots (9)$$

When object beam hologram U includes a frequency component that does not satisfy a sampling theorem, correction processing as below is applied to generate a hologram including information from which a state of a plane of interest (which is also referred to as a "sample plane" below) can be reconstructed, the plane being distant by a predetermined distance from the recording surface. A hologram including information from which the state of the sample plane can be reconstructed is defined as a reconstruction object beam hologram $U_\Sigma$. When object beam hologram U satisfies the sampling theorem, object beam hologram U is adopted as it is as reconstruction object beam hologram $U_\Sigma$.

By way of example of correction processing, before elimination of in-line reference beam L, the number of sampling points that form an image outputted from image sensor D may be increased by interpolation. Alternatively, a pitch between pixels of image sensor D may be subdivided by application of a division and superimposition step disclosed in WO2020/045584 (PTL 3). By using the division and superimposition step, an amount of computation can be reduced.

By diffraction calculation by plane wave expansion onto reconstruction object beam hologram $U_\Sigma$, a distribution of optical waves at any sample plane can be reconstructed. A hologram resulting from propagation over a distance d of reconstruction object beam hologram $U_\Sigma$ (at a sample plane distant from the recording surface by distance d) by plane wave expansion is denoted as $U_d$.

Hologram $U_d$ can be generalized as in an expression (10) below, where d represents a distance from the light receiving surface (recording surface) of image sensor D to a position at which reconstruction is desired, within which M media (m = 1, 2, ..., M) are included, $d_m$ represents a distance of each medium, and $n_m$ represents an index of refraction of each medium. $k_{zm}$ in the expression is calculated in accordance with an expression (11).

$$U_d(x, y) = F^{-1}\left[F[U_\Sigma(x, y)] \prod_{m=1}^{M} T_{m,m+1} \exp(ik_{zm}d_m)\right] \qquad \cdots (10)$$

$$k_{zm} = \sqrt{\left(\frac{2\pi n_m}{\lambda}\right)^2 - k_x^2 - k_y^2} \qquad \cdots (11)$$

When there are a plurality of media, a boundary surface between the media is assumed as being in parallel to the recording surface. A transmission coefficient at the time of incidence from a medium m into a medium m+1 is expressed as $T_{m,\,m+1}(k_x, k_y)$. $T_{M,\,M+1}(k_x, k_y)$ is regarded as being always 1.

For example, in the case of propagation only through air by distance d, a condition of M = 1, $d_1$ = d, and $n_m$ = 1 is set.

When the transmission coefficient at the time of incidence from medium m into medium m+1 can be regarded as being substantially even without depending on wave numbers $k_x$ and $k_y$, calculation may be simplified with $T_{m,\,m+1}$ being defined as $T_{m,\,m+1} \equiv 1$.

(b3: Mechanism That Changes Manner of Illumination with Illumination Light)

A mechanism that changes a manner of illumination with illumination light Q will now be described.

The optical measurement system according to the present embodiment records a plurality of off-axis holograms $I_{OR}$ (which will be an object beam hologram or an illumination light hologram depending on whether or not there is sample S) by changing a manner of illumination with illumination light Q. For example, an illumination angle may be adopted as the manner of illumination with illumination light Q.

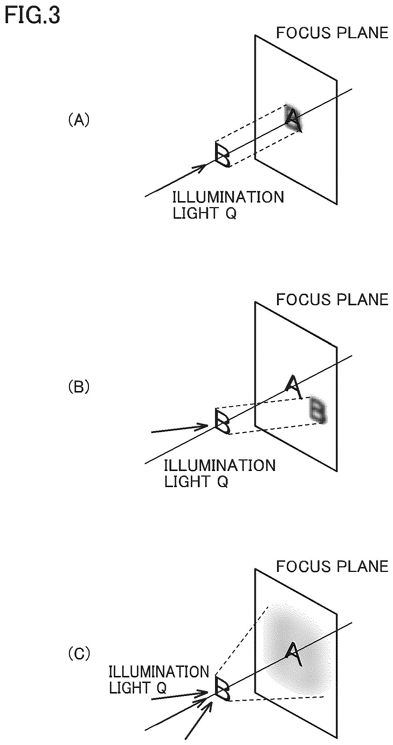

Fig. 3 is a diagram for illustrating an effect obtained by changing the manner of illumination with illumination light Q in the optical measurement system according to the present embodiment.

Referring to Fig. 3 (A) to (C), an example in which there are an object A located at the sample plane and an object B located at a position distant from the sample plane is assumed. Object A is an object to be reconstructed as the image and object B is an object that is present at a position other than the sample plane and causes scattering.

As shown in Fig. 3 (A), when illumination light Q is emitted in a single direction (a single illumination angle), diffracted light caused by scattering at object B affects the sample plane (a position of focus of illumination light) and deteriorates quality of the reconstructed image.

When the illumination angle is changed, as shown in Fig. 3 (B), a position of the image of object A on the sample plane does not change, whereas a position on the sample plane, of diffracted light caused by scattering at object B changes depending on the illumination angle.

Then, as shown in Fig. 3 (C), a plurality of images are reconstructed by changing the illumination angle, and a plurality of reconstructed images are composed. As a result of such combination of the plurality of images, object A substantially identical in signal amplitude and phase among the plurality of images is emphasized, and influence by object B relatively decreases.

The illumination angle is changed to i angles (i being an integer not smaller than 2) (illumination light $Q_i$) and a plurality of off-axis holograms $I_{ORi}$ are recorded. Reconstruction object beam holograms $U_{\Sigma i}$ are calculated from respective off-axis holograms $I_{ORi}$. An optical wave distribution obtained by propagation of reconstruction object beam holograms $U_{\Sigma i}$ to the sample plane by plane wave expansion (a distance of propagation being identical) is defined as an object beam distribution Usi. Furthermore, an amplitude phase distribution $U_{Pi}$ at the sample plane is calculated by dividing object beam distribution $U_{Si}$ of a complex amplitude by illumination light distribution $Q_{Si}$ at the sample plane generated by illumination light $Q_i$.

Thus, amplitude phase distribution $U_{Pi}$ at the sample plane is calculated based on the object beam hologram (first hologram) resulting from modulation with off-axis reference beam R, of object beam O obtained by illumination of sample S with illumination light Q and the illumination light hologram (second hologram) resulting from modulation of illumination light Q with off-axis reference beam R in the absence of sample S. Amplitude phase distribution $U_{Pi}$ is calculated by addition of an amount of phase shift $\Delta\theta_i$ caused by sample S to a phase distribution $\theta_{Qi}$ of illumination light $Q_i$.

Finally, a composed amplitude phase distribution $U_{SA}$ is calculated by summing amplitude phase distribution $U_{Pi}$ calculated for each manner (illumination angle) of illumination with illumination light, with the amplitude phase distribution being maintained as a complex number, in accordance with an expression (12) below.

$$U_{SA} = \sum_i U_{Pi} = \sum_i \frac{U_{Si}}{Q_i} \qquad \cdots (12)$$

As shown in the expression (12) above, amplitude phase distribution $U_{Pi}$ is summed, with the amplitude phase distribution being maintained as the complex number, without being converted to intensity (absolute value), so that it can be handled as information having directivity such as a vector. Consequently, if phase components at positions other than the sample plane can be regarded as being sufficiently random, they can be expected to cancel each other and converge to zero which is an average value. Consequently, influence by diffracted light caused by scattering at object B can be suppressed. The SN ratio of the reconstructed image can thus be improved.

When amplitude phase distribution $U_{Pi}$ is converted to intensity (absolute value) and then summed, the intensity constantly has a positive value, and hence influence by diffracted light caused by scattering at object B remains.

In order to regard the phase components at positions other than the sample plane as sufficiently being random, a sufficiently large number of manners (for example, illumination angles) of illumination with illumination light Q are preferably set. The SN ratio is in proportion to a square root of the number of manners of illumination with illumination light Q (for example, measurement at four illumination angles is twice as high in SN ratio as measurement at a single illumination angle).

A range within which the illumination angle can be changed is optically determined by a size of sample S, a resolution of image sensor D, or a width of a field of view of image sensor D. The illumination angle is changed within an optically allowable range. Change in illumination angle means change in azimuth angle while an angle of incidence of illumination light Q is constant.

As will be described later, the number of illumination angles to be changed is typically determined by required quality and an allowable time period for processing.

When a coordinate of an image reconstructed from reconstruction object beam hologram $U_{\Sigma i}$ is displaced by disturbance, a space resolution (on the xy plane) may lower, although a phase resolution does not lower. In this case, summing is preferably performed after displacement of a reconstructed image or sample S is rectified. More specifically, a coordinate at which correlation between object beams is maximum is calculated, and with the calculated coordinate being defined as the reference, displacement of the reconstructed image or sample S is calculated. In other words, displacement from a reference coordinate is calculated and corrected, and then summing processing is performed.

(b4: Mechanism that Restricts Range of Illumination)

A mechanism that restricts a range of illumination will now be described.

In order to apply the bandpass filter to the expressions (5) and (4) to extract the direct image component in the third term, in a spatial frequency band, the direct image component should not be superimposed on the light intensity component and the conjugate image component. In the present embodiment, the restriction mechanism such as mask A2 restricts a range of illumination light Q to prevent deterioration of the image due to superimposition of the spatial frequency band.

While a degree of freedom of an illumination method is maintained by formation on sample S, of an image of opening pattern SP2 in mask A2 arranged at a position distant from sample S, a spatial frequency bandwidth included in interference fringes is appropriately controlled to efficiently make use of the spatial frequency bandwidth within which image sensor D can make recording.

In optical measurement system 1, mask A1 and lens L1 implement the point light source of off-axis reference beam R. A spatial frequency f of interference fringes at any point on the recording surface can be expressed with an angle of incidence $\theta_O$ of object beam O at that point and an angle of incidence $\theta_R$ of off-axis reference beam R, as shown in an expression (13) below.

$$f = \frac{\sin \theta_O - \sin \theta_R}{\lambda} \cong \frac{\theta_O - \theta_R}{\lambda} \qquad \cdots (13)$$

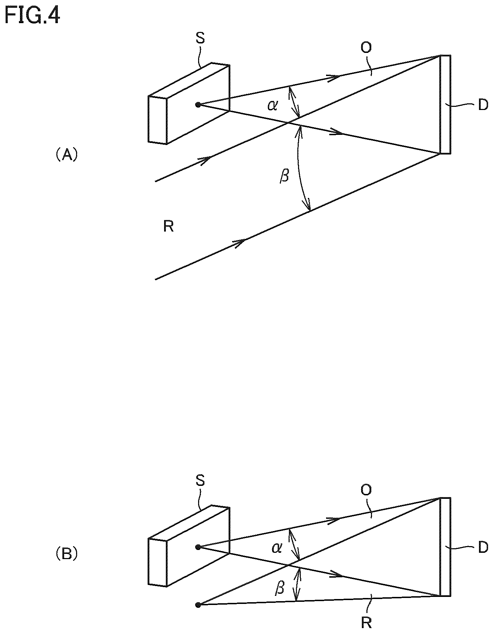

Fig. 4 is a diagram for illustrating a state of incidence of object beam O and off-axis reference beam R on the recording surface of image sensor D. Fig. 4 (A) shows an example where off-axis reference beam R is a plane wave and Fig. 4 (B) shows an example where off-axis reference beam R is a spherical wave.

Referring to Fig. 4 (A), when off-axis reference beam R is a plane wave, an angle formed at any point on the recording surface of image sensor D by object beam O and off-axis reference beam R is dependent on a position on the recording surface of image sensor D. For example, an angle $\alpha$ formed at an upper end of the recording surface of image sensor D by object beam O and off-axis reference beam R and an angle $\beta$ formed at a lower end of the recording surface thereby are greatly different from each other.

In contrast, referring to Fig. 4 (B), when off-axis reference beam R is a spherical wave, an angle formed at one point on the recording surface of image sensor D by object beam O and off-axis reference beam R is not dependent on the position on the recording surface but has substantially the same value. For example, angle $\alpha$ formed at the upper end of the recording surface of image sensor D by object beam O and off-axis reference beam R is substantially the same as angle $\beta$ formed at the lower end of the recording surface thereby.

In other words, by providing off-axis reference beam R from the point light source, an angle formed between a light beam (object beam O) generated from any point of sample S and a light beam generated from the point light source of off-axis reference beam R can substantially be constant at any point on the recording surface.

When object beam O is regarded as a set of wave sources located on the same z plane where the point light source of off-axis reference beam R is located, relation shown in an expression (14) below is approximately satisfied between a position $(x_s, y_s)$ of the wave source on the z plane and a corresponding spatial frequency $(u_s, v_s)$.

$$u_s = \frac{x_s}{z_L \lambda}, \quad v_s = \frac{y_s}{z_L \lambda} \qquad \cdots (14)$$

$z_L$ in the expression represents a distance in the direction of the z axis from the point light source of off-axis reference beam R to the recording surface and $\lambda$ represents a wavelength. The spatial frequency in the x direction is denoted as u and the spatial frequency in the y direction is denoted as v.

As shown in the expression (14), it can be seen that the position of the wave source (object beam O) on the z plane and the spatial frequency (a coordinate of a spectral component) satisfy approximately linear relation. Therefore, spread of the spatial frequency band of the direct image component can be controlled by restriction of an area where the wave source (object beam O) is present. The spatial frequency band can thus efficiently be made use of.

The "area where the wave source is present" means a range where sample S is illuminated. In other words, the range of illumination can be restricted by optimization of opening pattern SP2 in mask A2 and thus the spatial frequency band can appropriately be controlled. Since mask A2 serves to simply restrict the range of illumination of sample S, it does not cause distortion of a reconstructed image so long as a complex amplitude of object beam O is correctly recorded.

A method of determining a size of opening pattern SP2 in mask A2 will now be described.

As described above, off-axis hologram $I_{OR}$ recorded in the optical system shown in Fig. 1 (B) is calculated as in the expression (5). In the expression (5), the component necessary for reconstruction of the image is the direct image component in the third term and other terms are superimposed as noise components. Therefore, other terms should be removed by the bandpass filter.

A coordinate of the origin of image sensor D is expressed as (0, 0, 0) and a coordinate of the center of sample S is expressed as (0, 0, $z_L$).

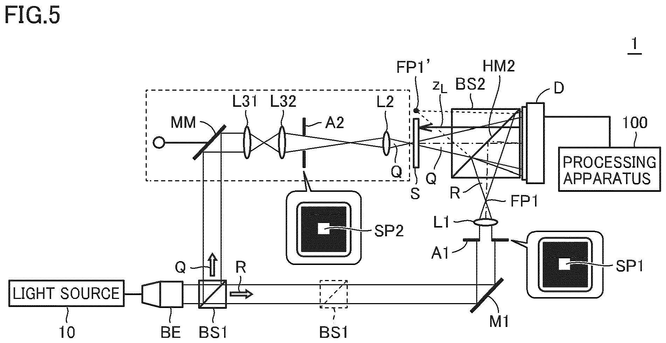

Fig. 5 is a diagram for illustrating relation of sample S and off-axis reference beam R in the optical measurement system according to the present embodiment. Referring to Fig. 5, a coordinate of the point light source (a light condensation point FP1') resulting from expansion of the point light source (a light condensation point FP1) of off-axis reference beam R on the side of sample S with respect to half mirror HM2 of beam splitter BS2 is expressed as $(x_R, y_R, z_R, = z_L)$ and the range of illumination of sample S is defined as a rectangle having a size of a in the x direction and b in the y direction. Then, a bandwidth $W_x$ in a u direction and a bandwidth $W_y$ in a v direction of the direct image component in the third term can approximately be expressed as in an expression (15) below, and a central frequency $u_c$ in the u direction and a central frequency $v_c$ in the v direction can approximately be expressed as in an expression (16) below.

$$W_x = \frac{a}{z_L \lambda}, \quad W_y = \frac{b}{z_L \lambda} \qquad \cdots (15)$$

$$u_c = \frac{x_R}{z_L \lambda}, \quad v_c = \frac{y_R}{z_L \lambda} \qquad \cdots (16)$$

A bandwidth $W_x$ in the u direction of the conjugate image component (the fourth term) and a bandwidth $W_y$ in the v direction thereof can also approximately be expressed as in the expression (15) above. Central frequency $u_c$ in the u direction and central frequency $v_c$ in the v direction of the conjugate image component (the fourth term) are expressed, with signs in the expression (16) above being inverted.

A bandwidth of a component calculated by combining the light intensity component in the first term and the light intensity component in the second term spreads over a size twice as large as that expressed in the expression (15) with the origin being defined as the center.

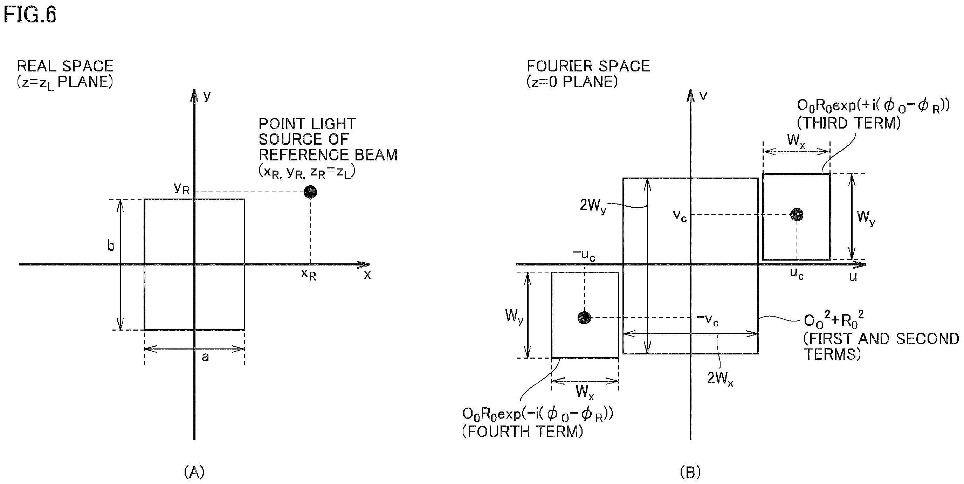

Relation above can be shown as in Fig. 6.

Fig. 6 is a diagram for illustrating relation of a spatial frequency band in connection with an off-axis hologram in the optical measurement system according to the present embodiment. Fig. 6 (A) shows a position of off-axis reference beam R and a range of illumination of sample S on a z = $z_L$ plane in a real space. Fig. 6 (B) shows a spectrum resulting from two-dimensional Fourier transform of the hologram recorded on the recording surface (z = 0).

Referring to Fig. 6 (A), in the real space, sample S is present in a size of a × b with the coordinate $(0, 0, z_L)$ being defined as the center. The point light source of off-axis reference beam R is present at a position distant by $x_R$ in the x direction and $y_R$ in the y direction from the coordinate $(0, 0, z_L)$.

Referring to Fig. 6 (B), in a Fourier space (a spatial frequency domain), the direct image component in the third term including information on object beam O spreads over a size of a bandwidth $W_x \times W_y$, and the central frequency of the direct image component is determined depending on a coordinate $(x_R, y_R)$ of the point light source of the off-axis reference beam.

In order to extract only the third term (direct image component) including information on object beam O from a spectrum in the Fourier space shown in Fig. 6 (B) with the use of the bandpass filter, superimposition on components in other terms (the first term, the second term, and the fourth term) should be avoided.

On the other hand, since the spatial frequency band of image sensor D is limited, it is not preferable to set excessively high central frequencies $u_c$ and $v_c$. Therefore, in order to efficiently make use of the spatial frequency band of image sensor D, the component in the third term should be brought closer to the limit up to which it is not superimposed on components in other terms (the first term, the second term, and the fourth term).

In order to arrange the bands as being proximate to one another, the spatial frequency bandwidth is restricted to be kept within an appropriate range. When the off-axis reference beam is diverging light (point light source), relation in the expression (5) above is satisfied. Therefore, by restriction of the range of illumination with illumination light Q, the spatial frequency bandwidth of each component can be restricted to be kept within an appropriate range.

The size of the range of illumination of sample S with illumination light Q (that is, opening pattern SP2 in mask A2 serving as the restriction mechanism) is thus determined such that the component (the third term) corresponding to illumination light Q is not superimposed on components (the first term and the second term) other than the component corresponding to illumination light Q in the Fourier space (spatial frequency domain) of the hologram recorded with image sensor D.

By restriction of the spatial frequency bandwidth of each component to be kept within the appropriate range, the spatial frequency band of image sensor D can efficiently be made use of and noise caused by superimposition of the spatial frequency band can also be suppressed.

Though application to the off-axis holography optical system is described, mask A2 described above is effective also in restriction of the spatial frequency bandwidth of the direct image component to be kept within a range within which recording with image sensor D can be made, also in an optical system adapted to another holography where diverging light (that is, the point light source or a light source that can be regarded as the point light source) is employed as a reference beam.

Mask A2 used in the optical measurement system according to the present embodiment may be similar in outer geometry to a field stop used in an optical microscope. The field stop, however, is used for the purpose of suppression of stray light caused by impingement of needless light (light out of the field of view) on a wall in an optical path. Though the noise level can be lowered by the field stop, little stray light is suppressed. Therefore, unless detection of weak light is aimed at, no great problem will arise without taking positive measures.

In contrast, restriction of the range of illumination in digital holography where diverging light is adopted as the reference beam is effective for restriction of the spatial frequency bandwidth included in interference fringes to be kept within the range within which recording with image sensor D can be made. Mask A2 used in the optical measurement system according to the present embodiment is used for this purpose.

Mask A2 used in the optical measurement system according to the present embodiment thus exhibits an effect different from the effect exhibited by the field stop used in the optical microscope.

Though use of mask A2 provided with opening pattern SP2 of a predetermined size as an exemplary restriction mechanism is illustrated in the description above, without being limited as such, the restriction mechanism may be implemented by any optical element.

For example, the size of the opening pattern (a cross-sectional area within which illumination light passes) may freely be changed with the use of an optical element capable of controlling a transmittance of light such as a polarization mirror or liquid crystal. As the size of the opening pattern can freely be changed, change in distance between sample S and image sensor D or change in position of the point light source of the off-axis reference beam can readily be addressed.

(b5: Illumination Light Profile)

The optical measurement system according to the present embodiment requires an illumination light profile for calculation of composed amplitude phase distribution UsA.

For example, change in distance from the recording surface to the sample plane is also assumed in the case of measurement with sample S successively being replaced. In this case, by diffraction calculation, an illumination light profile at another distance can be calculated based on an illumination light profile at the sample plane distant from the recording surface by a certain distance. Therefore, it is not necessary to record the illumination light profile each time the distance from the recording surface to the sample plane changes.

When sample S includes a substrate which is not an object to be measured, an illumination light profile as to illumination light that passes through the substrate can be calculated by performing on the illumination light profile, calculation of propagation within a medium by plane wave expansion. In this case, when approximate thickness and index of refraction of the substrate have already been known, a sample consisting only of the substrate (a sample different from sample S to be measured) should be prepared, and the illumination light profile does not have to be recorded.

A layer of sample S other than the substrate can be measured with the use of the profile of illumination light that passes through the substrate. When recording only in connection with the substrate can be made, by recording of the profile of illumination light that passes through the substrate while the substrate alone is arranged, calculation of propagation within the medium in the substrate can also be omitted.

(b6: Measurement of Surface Geometry of Sample)

A method of measuring the surface geometry of sample S with optical measurement system 1 according to the first embodiment will now be described. An amount of phase shift caused by the sample is used for measurement of the surface geometry of sample S. In this case, visible light is preferably used as illumination light Q.

In the optical measurement system according to the present embodiment, the illumination light profile recorded while no sample S is arranged is used to subtract phase distribution $\theta_Q$ of illumination light from the phase distribution of composed amplitude phase distribution $U_{SA}$ to thereby calculate an amount of phase shift $\Delta\theta_i$ caused by sample S.

Optical measurement system 1 according to the first embodiment measures the surface geometry of sample S with the use of a relational expression of amount of phase shift $\Delta\theta$ caused by sample S and a thickness $\Delta d$ of sample S shown in an expression (17) below.

$$\Delta\theta = \Delta d(k_{z2} - k_{z1}) + \delta \qquad \cdots(17)$$

$k_{z1}$ in the expression represents a wave number in the z direction in sample S, $k_{z2}$ represents a wave number in the z direction in the medium where sample S is present, $\delta$ represents a phase correction term, and $\lambda$ represents a light source wavelength. Wave numbers $k_{z1}$ and $k_{z2}$ can be calculated in accordance with an expression (18) and an expression (19) below, respectively.

$$k_{z1} = \sqrt{\left(\frac{2\pi n_1}{\lambda}\right)^2 - k_x^2 - k_y^2} \qquad \cdots(18)$$

$$k_{z2} = \sqrt{\left(\frac{2\pi n_2}{\lambda}\right)^2 - k_x^2 - k_y^2} \qquad \cdots(19)$$

$n_1$ in the expression represents an index of refraction of a medium where sample S is present and $n_2$ represents an index of refraction of sample S. For example, when sample S is present in vacuum, an index of refraction $n_1$ is set to $n_1 = 1$.

Since wave number $k_x$ in the x direction and wave number $k_y$ in the y direction in the expression represent amounts of phase shift per unit length in the x direction and the y direction, they can be calculated by differentiation of phase distribution $\theta_Q$ of illumination light Q at the sample plane as shown in an expression (20) and an expression (21) below.

$$k_x(x,y) = \frac{\partial}{\partial x}\theta_Q(x,y) \qquad \cdots(20)$$

$$k_y(x,y) = \frac{\partial}{\partial y}\theta_Q(x,y) \qquad \cdots(21)$$

Phase correction term $\delta$ in the expression (17) is used for correction of phase shift due to a complex transmittance when the transmittance attains to a complex number for such a reason as light absorption by sample S. When phase shift due to the complex transmittance can be regarded as being even in the entire sample S for such a reason that sample S is entirely of the same material, phase correction term $\delta$ may be omitted.

When the coordinate of the point light source of illumination light is displaced by disturbance, illumination light $Q_i$ may be corrected by translation of pixels on image sensor D. An amount of translation is typically determined to maximize correlation between object beam distribution Us and illumination light $Q_i$.

When a shape of a wave front of illumination light is smooth, an amount of information may be reduced by using a low-pass filter or polynomial approximation.

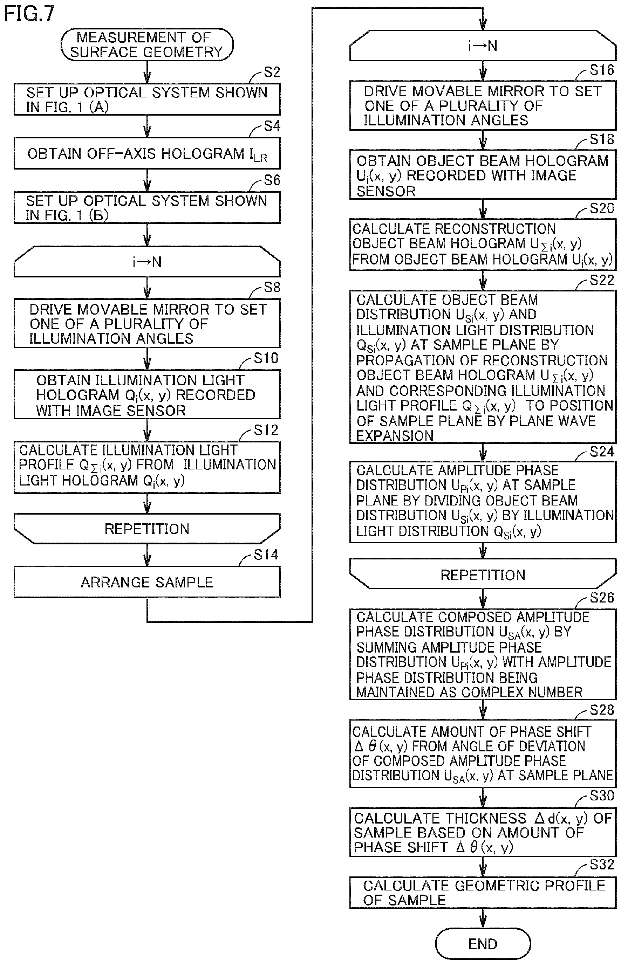

Fig. 7 is a flowchart showing a processing procedure in the method of measuring the surface geometry with optical measurement system 1 according to the first embodiment. In the processing procedure shown in Fig. 7, a visible light source may be employed as light source 10.

Referring to Fig. 7, initially, processing for obtaining in-line reference beam L is performed. More specifically, the optical system shown in Fig. 1 (A) is set up (step S2). Coherent light is generated from light source 10 and processing apparatus 100 obtains off-axis hologram $I_{LR}$ resulting from modulation of in-line reference beam L recorded with image sensor D with off-axis reference beam R (step S4). Unless the optical system associated with off-axis reference beam R is modified, steps S2 and S4 should only be performed once. Processing in steps S2 and S4 is performed for the purpose of improvement in accuracy of a reconstructed image, and depending on required accuracy, processing in steps S2 and S4 may be skipped.

In succession, processing for obtaining an illumination light profile is performed. More specifically, the optical system shown in Fig. 1 (B) is set up (step S6). At this time, a state where there is no sample S is maintained. A substrate equal in thickness to the substrate of sample S may be arranged at a position where sample S is arranged (sample position), or nothing can be arranged at the sample position. This state corresponds to the reference in measurement.

In succession, movable mirror MM is driven to set any one of a plurality of illumination angles (step S8). Coherent light is then generated from light source 10 and processing apparatus 100 obtains illumination light hologram $Q_i(x, y)$ (second hologram) recorded with image sensor D (step S10).

Processing apparatus 100 thus records with image sensor D, a hologram resulting from modulation with off-axis reference beam R, of light obtained by illumination with illumination light Q while there is no sample S. Alternatively, processing apparatus 100 records with image sensor D, a hologram of transmitted light obtained by illumination with illumination light Q, of only a substrate instead of sample S, the substrate being included in sample S and not being an object to be measured.

Processing apparatus 100 calculates illumination light profile $Q_{\Sigma i}(x, y)$ from illumination light hologram $Q_i(x, y)$ (step S12).

Processing in steps S8 to S12 is repeated as many times as the number (N) of predetermined illumination angles ($1 \le i \le N$).

Processing for obtaining an amplitude phase distribution of sample S is then performed. More specifically, sample S is arranged at a predetermined position of the optical system shown in Fig. 1 (B) (step S14). In succession, movable mirror MM is driven to set any one of a plurality of illumination angles (step S 16). Then, coherent light is generated from light source 10 and processing apparatus 100 obtains an object beam hologram $U_i(x, y)$ recorded with image sensor D (step S18).

In succession, processing apparatus 100 calculates reconstruction object beam hologram $U_{\Sigma i}(x, y)$ from object beam hologram $U_i(x, y)$ (step S20). Processing apparatus 100 then has reconstruction object beam hologram $U_{\Sigma i}(x, y)$ and corresponding illumination light profile $Q_{\Sigma i}(x, y)$ propagate to a position of the sample plane by plane wave expansion and calculates object beam distribution $U_{Si}(x, y)$ and illumination light distribution $Q_{\Sigma i}(x, y)$ at the sample plane (step S22). Furthermore, processing apparatus 100 calculates amplitude phase distribution $U_{Pi}(x, y)$ at the sample plane by dividing object beam distribution $U_{Si}(x, y)$ by corresponding illumination light distribution $Q_{Si}(x, y)$ (step S24).

Processing in steps S16 to S24 is repeated as many times as the number (N) of predetermined illumination angles ($1 \le i \le N$).

Processing apparatus 100 then calculates the surface geometry of sample S. More specifically, processing apparatus 100 calculates composed amplitude phase distribution $U_{SA}(x, y)$ by summing amplitude phase distribution $U_{Pi}(x, y)$, with the amplitude phase distribution being maintained as a complex number (step S26).

In succession, processing apparatus 100 calculates an amount of phase shift $\Delta\theta(x, y)$ from an angle of deviation of composed amplitude phase distribution $U_{SA}(x, y)$ at the sample plane (step S28). Processing apparatus 100 then calculates a thickness $\Delta d(x, y)$ of sample S based on amount of phase shift $\Delta\theta(x, y)$ (step S30). A relational expression shown in the expression (17) above is used for calculation of thickness $\Delta d$ of sample S.

Finally, processing apparatus 100 calculates a geometric profile of sample S by aggregating thicknesses $\Delta d(x, y)$ at coordinates in the sample plane (step S32).

The surface geometry of sample S can be calculated through processing as above.

An index of refraction and a profile of the index of refraction of sample S can also be measured. In this case, an index of refraction $n_2(x, y)$ of sample S is calculated in step S30 and the profile of the index of refraction of sample S is calculated by aggregating indices of refraction $n_2(x, y)$ at coordinates in the sample plane in step S32.

(b7: Measurement of Internal Structure of Sample)

A method of measuring the internal structure of sample S with optical measurement system 1 according to the first embodiment will now be described. Near infrared rays are preferably used as illumination light Q in measurement of the internal structure of sample S. With the use of near infrared rays as illumination light Q, object beam hologram U obtained by illumination of sample S with illumination light Q shows the internal structure of sample S. By setting the sample plane at any position with respect to sample S (a position distant by any distance from the recording surface), the internal structure of sample S can be measured.

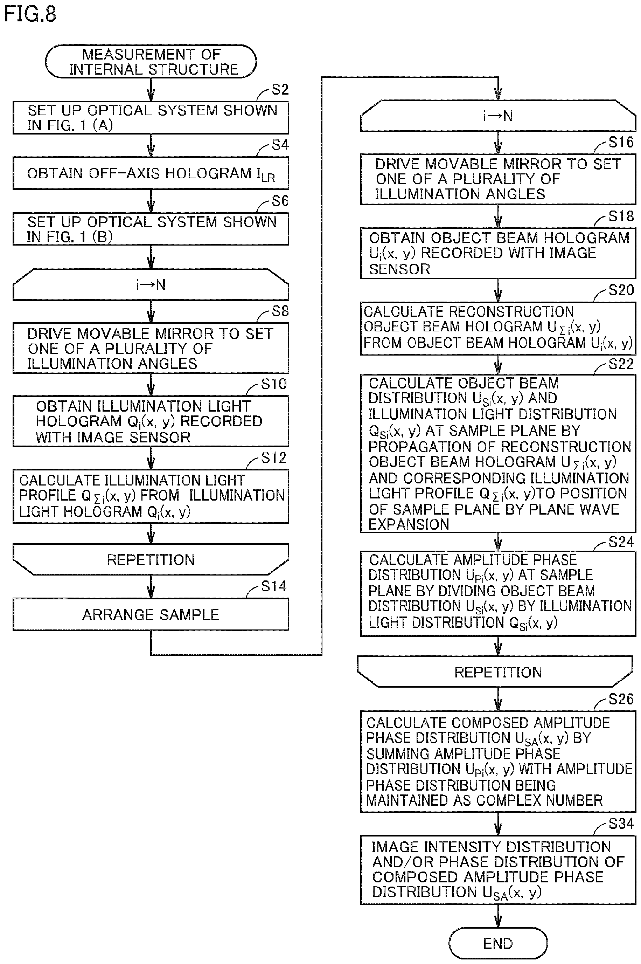

Fig. 8 is a flowchart showing a processing procedure in the method of measuring the internal structure with optical measurement system 1 according to the first embodiment. In the processing procedure shown in Fig. 8, a near infrared light source may be employed as light source 10.

The procedure shown in the flowchart in Fig. 8 includes processing (step S34) for imaging an intensity distribution and/or a phase distribution of composed amplitude phase distribution $U_{SA}(x, y)$ instead of the processing in steps S28 to S32 shown in the flowchart shown in Fig. 7.

Specifically, processing apparatus 100 calculates composed amplitude phase distribution $U_{SA}(x, y)$ by summing amplitude phase distribution $U_{Pi}(x, y)$, with the amplitude phase distribution being maintained as a complex number (step S26) and images calculated composed amplitude phase distribution $U_{SA}(x, y)$, to thereby visualize the internal structure of sample S.

<C. Second Embodiment: Reflection Optical System>

(c1: Optical System)

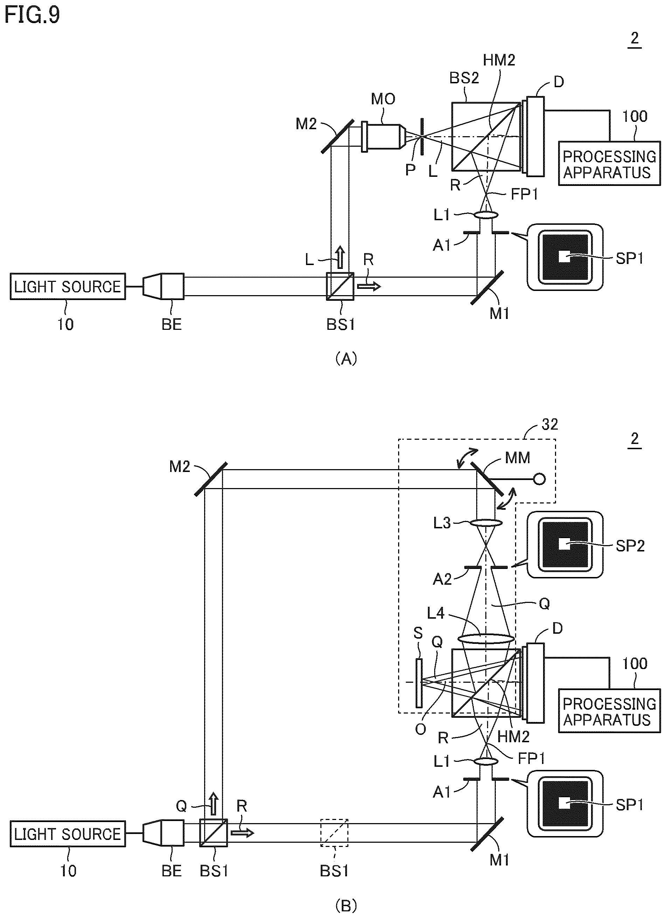

Fig. 9 is a schematic diagram showing an exemplary configuration of an optical measurement system 2 according to the second embodiment. Fig. 9 (A) shows an optical system in recording of an in-line reference beam and Fig. 9 (B) shows an optical system in recording of an object beam. Optical measurement system 2 can configure the optical systems shown in Fig. 9 (A) and (B).

Since the optical system shown in Fig. 9 (A) is the same as the optical system in recording of the in-line reference beam in optical measurement system 1 according to the first embodiment shown in Fig. 1 (A), detailed description thereof will not be repeated.

The optical system shown in Fig. 9 (B) corresponds to the optical system for recording of off-axis hologram $I_{OR}$ resulting from modulation with off-axis reference beam R, of object beam O obtained by illumination of sample S with illumination light Q. More specifically, the optical system shown in Fig. 9 (B) generates off-axis hologram $I_{OR}$ (object beam hologram: first hologram) from reflected light obtained by illumination of sample S with illumination light Q. An illumination light profile is also obtained with the use of the optical system shown in Fig. 9 (B). In this case, a reference plane instead of sample S is arranged as will be described later.

The optical system shown in Fig. 9 (B) is different from the optical system in recording of the object beam in optical measurement system 1 according to the first embodiment shown in Fig. 1 (B) in configuration for illumination of sample S with illumination light Q. Therefore, off-axis reference beam R outputted from the other side of beam splitter BS1 is guided to image sensor D through the optical path common to that in Figs. 1 (A) and (B) and 9 (A).

Light outputted from one side of beam splitter BS1 is used as illumination light Q for illumination of sample S.

More specifically, illumination light Q divided by beam splitter BS2 is reflected by mirror M2, thereafter passes through a measurement optical system 32, and is guided to beam splitter BS2. Illumination light Q is further reflected by half mirror HM2 of beam splitter BS2 and sample S is illuminated therewith. Object beam O obtained by illumination of sample S with illumination light Q (that is, light reflected by sample S) passes through half mirror HM2 of beam splitter BS2 and is guided to image sensor D.

Measurement optical system 32 includes movable mirror MM, lens L3, mask A2, and a lens L4. As in the first embodiment, illumination light Q reflected by movable mirror MM is condensed by lens L3 and passes through mask A2. Illumination light Q that passes through mask A2 is further condensed by lens L4 and an image thereof is formed on sample S. In other words, an image of opening pattern SP2 in mask A2 passes through lens L4 and is formed on sample S. The range within which sample S is illuminated with illumination light Q that passes through mask A2 can thus be restricted. By restriction of the range of illumination with illumination light Q, unwanted light can be reduced and measurement accuracy can be enhanced. As movable mirror MM rotates, the manner of illumination with illumination light Q is changed.

Since the range of illumination may vary depending on the thickness of sample S also in optical measurement system 2, for addressing such variation, opening pattern SP2 in mask A2 is changed or a position of lens L2 for formation of an image of illumination light Q on sample S is changed as necessary.

When mirror M2 and mask A2 are arranged in optical proximity, lens L3 does not have to be provided.

(c2: Illumination Light Profile)

An illumination light profile in optical measurement system 2 will now be described. In a reflection optical system adopted in optical measurement system 2, a reference plane is arranged at a position where sample S is to be arranged (sample position) and reflected light from the reference plane is used as illumination light Q. The reference plane is preferably a plane, and for example, optical flat can be employed. In other words, the optical system shown in Fig. 9 (B) obtains the illumination light profile from reflected light obtained by illumination with illumination light Q, of the reference plane instead of sample S.

Since an illumination light distribution Qs at the sample plane different in distance can be calculated by propagation of recorded illumination light Q, illumination light Q does not have to be recorded each time the distance from the recording surface changes as in the first embodiment (transmission optical system). When the coordinate of the point light source of illumination light is displaced due to disturbance, illumination light Q may be corrected by translation of pixels on image sensor D.

A plurality of illumination light profiles may be recorded while the reference plane is translated in the x direction and the y direction for the purpose of elimination of an error in geometry included in the reference plane, and an average value of the plurality of recorded illumination profiles may be adopted as the illumination light profile to actually be used.

(c3: Measurement of Surface Geometry of Sample)

A method of measuring the surface geometry of sample S with optical measurement system 2 according to the second embodiment will now be described. An amount of phase shift caused by sample S is used for measurement of the surface geometry of sample S. In this case, visible light is preferably used as illumination light Q.

Relation between amount of phase shift $\Delta\theta$ caused by sample S and a height $\Delta h$ of sample S is as shown in an expression (22) below.

$$\Delta\theta = 2k_z\Delta h + \delta \qquad \cdots(22)$$

$k_x$ in the expression represents a wave number in the x direction, $k_y$ represents a wave number in the y direction, and $\delta$ represents a phase correction term.

Wave numbers $k_x$ and $k_y$ can be calculated in accordance with the expression (20) and the expression (21) above. When phase shift due to a complex reflectivity can be regarded as being even in the entire sample S for such a reason that sample S is entirely of the same material, phase correction term $\delta$ may be omitted.

In measurement of a geometry (in-plane profile) over the entire sample plane, an optical system where illumination light Q is parallel light may be adopted. When illumination light Q is a spherical wave, focus displacement with respect to the sample plane may be detected as a false geometry in a concave or convex shape. Such a false geometry is caused by the fact that illumination light is a spherical wave. Therefore, in measurement of the geometry (in-plane profile) over the entire sample plane, the optical system in which illumination light Q is parallel light is preferably adopted.

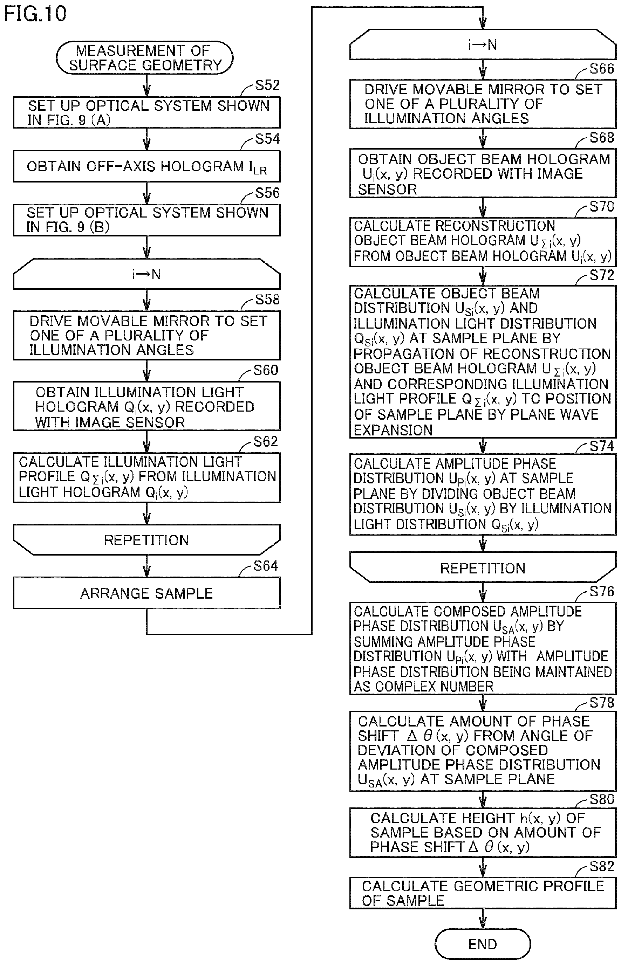

Fig. 10 is a flowchart showing a processing procedure in the method of measuring the surface geometry with optical measurement system 2 according to the second embodiment. In the processing procedure shown in Fig. 10, a visible light source may be employed as light source 10.

Referring to Fig. 10, initially, processing for obtaining in-line reference beam L is performed. More specifically, the optical system shown in Fig. 9 (A) is set up (step S52). Coherent light is then generated from light source 10 and processing apparatus 100 obtains off-axis hologram $I_{LR}$ resulting from modulation with off-axis reference beam R, of in-line reference beam L recorded with image sensor D (step S54). Unless the optical system associated with off-axis reference beam R is modified, steps S52 and S54 should only be performed once. Processing in steps S52 and S54 is performed for the purpose of improvement in accuracy of the reconstructed image, and depending on required accuracy, processing in steps S52 and S54 may be skipped.

In succession, processing for obtaining an illumination light profile is performed. More specifically, the optical system shown in Fig. 9 (B) is set up (step S56). At this time, sample S is not arranged but the reference plane is arranged at a position where sample S is to be arranged (sample position). This state corresponds to the reference in measurement.

In succession, movable mirror MM is driven to set any one of a plurality of illumination angles (step S58). Coherent light is then generated from light source 10 and processing apparatus 100 obtains illumination light hologram

$Q_i(x, y)$ (second hologram) recorded with image sensor D (step S60).

Processing apparatus 100 calculates illumination light profile $Q_{\Sigma i}(x, y)$ from illumination light hologram $Q_i(x, y)$ (step S62).

Processing in steps S58 to S62 is repeated as many times as the number (N) of predetermined illumination angles ($1 \leq i \leq N$).

Processing for obtaining an amplitude phase distribution of sample S is then performed. More specifically, sample S is arranged at a predetermined position of the optical system shown in Fig. 9 (B) (step S64). In succession, movable mirror MM is driven to set any one of a plurality of illumination angles (step S66). Then, coherent light is generated from light source 10 and processing apparatus 100 obtains object beam hologram $U_i(x, y)$ recorded with image sensor D (step S68).

In succession, processing apparatus 100 calculates reconstruction object beam hologram $U_{\Sigma i}(x, y)$ from object beam hologram $U_i(x, y)$ (step S70). Processing apparatus 100 then has reconstruction object beam hologram $U_{\Sigma i}(x, y)$ and corresponding illumination light profile $Q_{\Sigma i}(x, y)$ propagate to a position of the sample plane by plane wave expansion and calculates object beam distribution $U_{Si}(x, y)$ and illumination light distribution $Q_{Si}(x, y)$ at the sample plane (step S72). Furthermore, processing apparatus 100 calculates amplitude phase distribution $U_{Pi}(x, y)$ at the sample plane by dividing object beam distribution $U_{Si}(x, y)$ by corresponding illumination light distribution $Q_{Si}(x, y)$ (step S74).

Processing in steps S66 to S74 is repeated as many times as the number (N) of predetermined illumination angles ($1 \leq i \leq N$).

Processing apparatus 100 then calculates the surface geometry of sample S. More specifically, processing apparatus 100 calculates composed amplitude phase distribution $U_{SA}(x, y)$ by calculating amplitude phase distribution $U_{Pi}(x, y)$, with the amplitude phase distribution being maintained as a complex number (step S76).

In succession, processing apparatus 100 calculates amount of phase shift $\Delta\theta(x, y)$ from an angle of deviation of composed amplitude phase distribution $U_{SA}(x, y)$ at the sample plane (step S78). Processing apparatus 100 then calculates a height $h(x, y)$ of sample S based on amount of phase shift $\Delta\theta(x, y)$ (step S80). A relational expression shown in the expression (22) above is used for calculation of height h of sample S.

Finally, processing apparatus 100 calculates a geometric profile of sample S by aggregating height $h(x, y)$ at coordinates on the sample plane (step S82).

The surface geometry of sample S can be calculated through processing as above.

(c4: Measurement of Internal Structure of Sample)

In measurement of the internal structure of sample S, near infrared rays are preferably used as illumination light Q. By using near infrared rays as illumination light Q, object beam hologram U obtained by illumination of sample S with illumination light Q shows the internal structure of sample S. The internal structure of sample S can be measured by setting the sample plane at any position (a position distant by any distance from the recording surface) with respect to sample S.

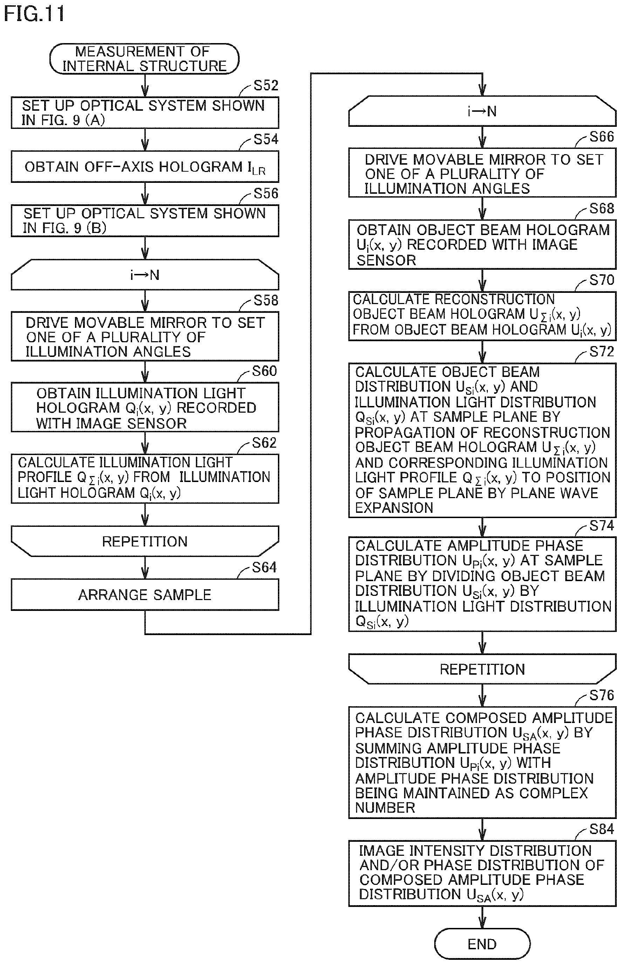

Fig. 11 is a flowchart showing a processing procedure in the method of measuring the internal structure with optical measurement system 2 according to the second embodiment. In the processing procedure shown in Fig. 11, a near infrared light source may be employed as light source 10.

A procedure shown in the flowchart in Fig. 11 includes processing (step S84) for imaging an intensity distribution and/or a phase distribution of composed amplitude phase distribution $U_{SA}(x, y)$ instead of the processing in steps S78 to S82 shown in the flowchart shown in Fig. 10.

Specifically, processing apparatus 100 calculates composed amplitude phase distribution $U_{SA}(x, y)$ by summing amplitude phase distribution $U_{Pi}(x, y)$ with the amplitude phase distribution being maintained as a complex number (step S76) and images calculated composed amplitude phase distribution $U_{SA}(x, y)$, to thereby visualize the internal structure of sample S.

<D. Processing Apparatus 100>

(d1: Exemplary Hardware Configuration)

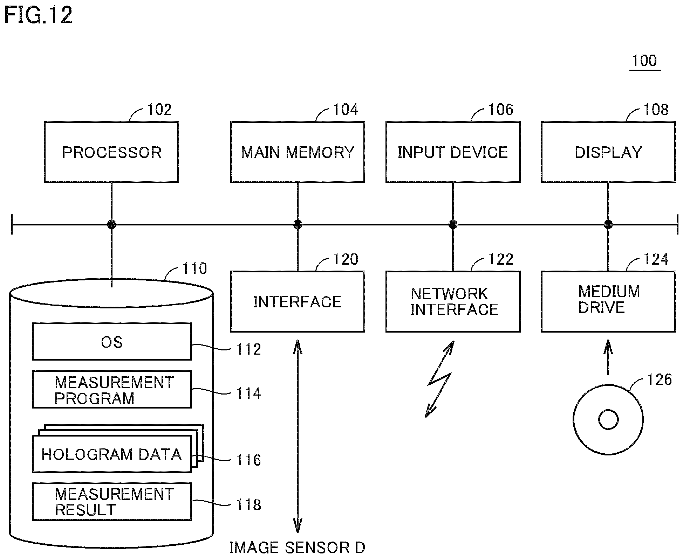

Fig. 12 is a schematic diagram showing an exemplary hardware configuration of processing apparatus 100 included in the optical measurement system according to the present embodiment. Referring to Fig. 12, processing apparatus 100 includes a processor 102, a main memory 104, an input device 106, a display 108, a storage 110, an interface 120, a network interface 122, and a medium drive 124 as its main hardware elements.

Processor 102 is typically a computing processing unit such as a central processing unit (CPU) or a graphics processing unit (GPU), and it reads one program or a plurality of programs stored in storage 110 on main memory 104 and executes the same. Main memory 104 is a volatile memory such as a dynamic random access memory (DRAM) or a static random access memory (SRAM), and functions as a working memory for execution of a program by processor 102.

Input device 106 includes a keyboard, a mouse, and the like and accepts an operation from a user. Display 108 provides output of a result of execution of a program by processor 102 to a user.

Storage 110 is implemented by a non-volatile memory such as a hard disk or a flash memory, and various programs and data are stored therein. More specifically, an operating system (OS) 112, a measurement program 114, hologram data 116, and a measurement result 118 are held in storage 110.

Operating system 112 provides an environment where processor 102 executes a program. Measurement program 114 implements an optical measurement method according to the present embodiment by being executed by processor 102. Hologram data 116 corresponds to image data outputted from image sensor D. Measurement result 118 includes a measurement result obtained by execution of measurement program 114.

Interface 120 mediates data transmission between processing apparatus 100 and image sensor D. Network interface 122 mediates data transmission between processing apparatus 100 and an external server apparatus.

Medium drive 124 reads necessary data from a recording medium 126 (for example, an optical disc) where a program to be executed by processor 102 is stored and has the data stored in storage 110. Measurement program 114 or the like executed in processing apparatus 100 may be installed through recording medium 126 or downloaded from a server apparatus through network interface 122 or the like.

Measurement program 114 may perform processing by calling a necessary module out of program modules provided as a part of operating system 112 in a predetermined sequence and at predetermined timing. In such a case, measurement program 114 not including the modules is also encompassed in the technical scope of the present invention. Measurement program 114 may be provided as being incorporated as a part of another program.

All or some of functions provided by execution of a program by processor 102 of processing apparatus 100 may be implemented by a hard-wired logic circuit (for example, a field-programmable gate array (FPGA) or an application specific integrated circuit (ASIC)).

Since the exemplary hardware configuration of processing apparatus 100 is also similar in another embodiment, detailed description thereof will not be repeated.

(d2: Exemplary Functional Configuration)

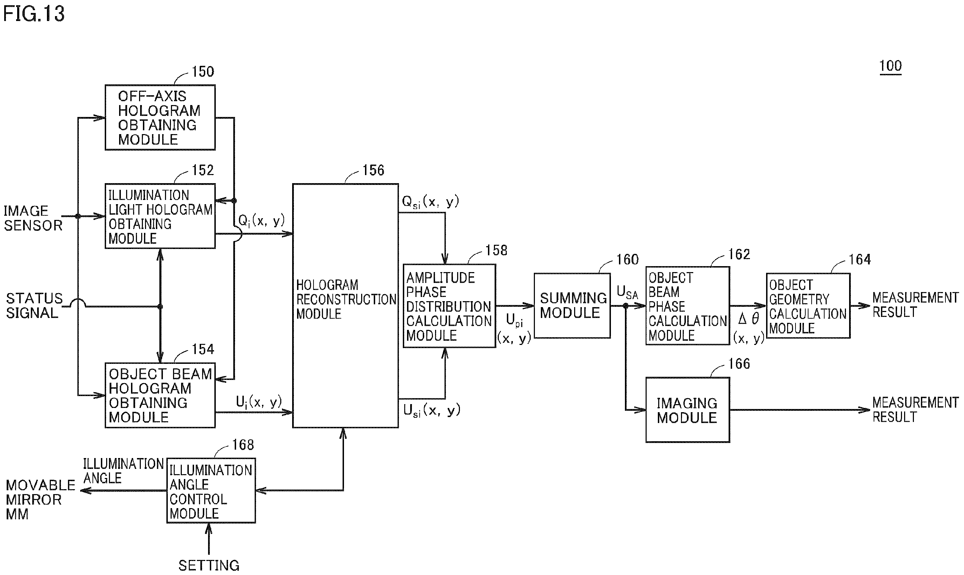

Fig. 13 is a schematic diagram showing an exemplary functional configuration of processing apparatus 100 included in the optical measurement system according to the present embodiment. Each functional element shown in Fig. 13 may typically be implemented by execution of measurement program 114 by processor 102 of processing apparatus 100. Hardware appropriate for each age is selected as hardware that implements the functional configuration shown in Fig. 13.

Referring to Fig. 13, processing apparatus 100 includes, as its main functional elements, an off-axis hologram obtaining module 150, an illumination light hologram obtaining module 152, an object beam hologram obtaining module 154, a hologram reconstruction module 156, an amplitude phase distribution calculation module 158, an summing module 160, an object beam phase calculation module 162, an object geometry calculation module 164, an imaging module 166, and an illumination angle control module 168.

Off-axis hologram obtaining module 150 has a hologram recorded with image sensor D recorded as off-axis hologram $I_{LR}$ while the optical system in recording of the in-line reference beam is set up.

Illumination light hologram obtaining module 152 obtains illumination light hologram $Q_i(x, y)$ recorded with image sensor D while the optical system in recording of the object beam is set up.

Object beam hologram obtaining module 154 obtains object beam hologram $U_i(x, y)$ recorded with image sensor D while the optical system in recording of the object beam is set up.

Illumination light hologram obtaining module 152 and object beam hologram obtaining module 154 are both configured to record a detection signal from image sensor D, and any one of them is activated in response to a status signal set manually or automatically.

Hologram reconstruction module 156 calculates a reconstruction illumination light hologram (illumination light profile $Q_{\Sigma i}(x, y)$) from illumination light hologram $Q_i(x, y)$ obtained by illumination light hologram obtaining module 152 and calculates reconstruction object beam hologram $U_{\Sigma i}(x, y)$ from object beam hologram $U_i(x, y)$ obtained by object beam hologram obtaining module 154.

Hologram reconstruction module 156 has illumination light profile $Q_{\Sigma i}(x, y)$ and reconstruction object beam hologram $U_{\Sigma i}(x, y)$ propagate to the position of the sample plane by plane wave expansion and calculates illumination light distribution $Q_{\Sigma i}(x, y)$ and object beam distribution $U_{Si}(x, y)$ at the sample plane.

Amplitude phase distribution calculation module 158 calculates amplitude phase distribution $U_{Pi}(x, y)$ at the sample plane by dividing object beam distribution $Q_{Si}(x, y)$ by corresponding illumination light distribution $Q_{Si}(x, y)$.

Summing module 160 calculates composed amplitude phase distribution $U_{SA}$ by summing amplitude phase distribution $U_{Pi}$, with the amplitude phase distribution being maintained as the complex number.

Object beam phase calculation module 162 calculates amount of phase shift $\Delta\theta(x, y)$ from the angle of deviation of composed amplitude phase distribution $U_{SA}(x, y)$.

Object geometry calculation module 164 calculates information (a thickness, an index of refraction, or the like) for specifying the surface geometry of sample S based on amount of phase shift $\Delta\theta(x, y)$. Object geometry calculation module 164 outputs a result of calculation as information on the geometry of sample S.

Imaging module 166 images the intensity distribution and/or the phase distribution of composed amplitude phase distribution $U_{SA}(x, y)$.

Illumination angle control module 168 determines the type and the number of illumination angles to be realized by movable mirror MM, in accordance with setting. Illumination angle control module 168 has movable mirror MM driven so as to realize a target illumination angle in coordination with hologram reconstruction module 156 or the like.

(d3: User Interface)

An exemplary user interface involved with setting of the illumination angle realized by the optical measurement system according to the present embodiment will now be described.

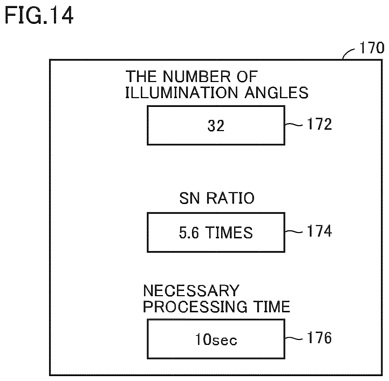

Fig. 14 is a schematic diagram showing an exemplary user interface screen provided in the optical measurement system according to the present embodiment. A user interface screen 170 shown in Fig. 14 is typically shown on display 108 of processing apparatus 100. Specifically, processing apparatus 100 provides user interface screen 170 that receives setting of the number of manners of illumination with illumination light Q (first light).

User interface screen 170 includes an input field 172 where the number of illumination angles is to be inputted, a display field 174 where a degree of improvement in SN ratio is to be shown, and a display field 176 where time required for measurement is to be shown.

Input field 172 receives setting of the number (i described above) of illumination angles to be varied. Processing apparatus 100 calculates the degree of improvement in SN ratio based on the number of set illumination angles and has the degree shown in display field 174, and it calculates time required for measurement and has the time shown in display field 176.

The user sets the number of illumination angles in consideration of quality (SN ratio) of a result of measurement and allowable tact time shown on user interface screen 170. The number of appropriate illumination angles may be suggested when required quality and allowable tact time are inputted.

The number of illumination angles may be set through user interface screen 170 as shown in Fig. 14.

<E. Exemplary Measurement>

Exemplary measurement with the optical measurement system according to the present embodiment will now be described.

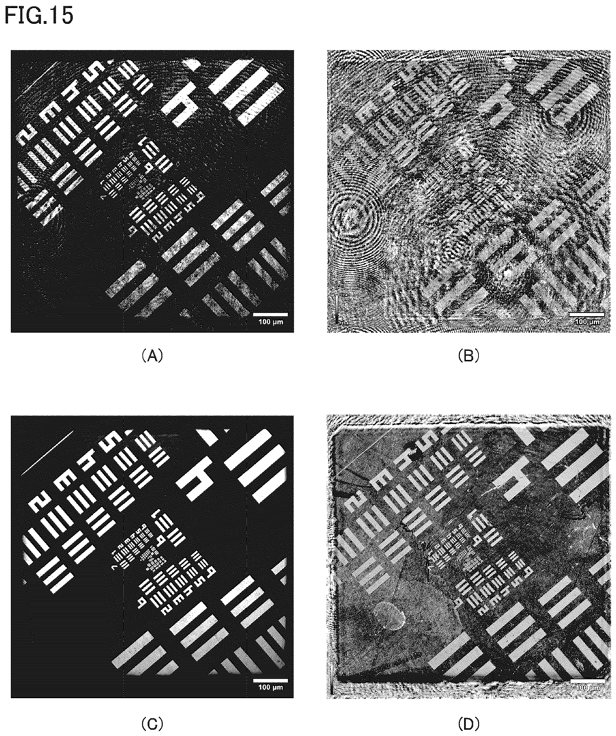

Fig. 15 is a diagram showing exemplary measurement of the surface geometry with the optical measurement system according to the present embodiment. Fig. 15 shows an exemplary amplitude phase distribution at a surface (sample plane) of a USAF 1951 test target recorded with the use of optical measurement system 2 including the reflection optical system shown in Fig. 9. A visible light source having a peak wavelength at 532 nm is employed as light source 10.

Fig. 15 (A) and (C) shows intensity distributions of the amplitude phase distribution and Fig. 15 (B) and (D) shows phase distributions of the amplitude phase distribution.

Fig. 15 (A) and (B) shows an amplitude phase distributions $U_{P1}$ recorded with a single angle of illumination with illumination light being set. Fig. 15 (C) and (D) shows the amplitude phase distribution (composed amplitude phase distribution $U_{SA}$) recorded with the angle of illumination with illumination light being varied to 500 angles. Specifically, Fig. 15 (C) and (D) shows an example of composed amplitude phase distribution $U_{SA}$ calculated by summing amplitude phase distribution $U_{Pi}$ (i = 500) as described above, with the amplitude phase distribution being maintained as the complex number.

In exemplary measurement shown in Fig. 15 (A) and (B), it can be seen that the reconstructed image has deteriorated by being affected by diffracted light included in illumination light. In particular, in the phase distribution in Fig. 15 (B), a geometry of the pattern included in the test target is indistinct.

In contrast, influence by diffracted light included in illumination light can be suppressed by summing of amplitude phase distributions $U_{Pi}$ with the amplitude phase distributions being maintained as the complex numbers, and it can be seen that not only the geometry of the pattern but also soiling attached to the surface of the test target is clearly visualized.

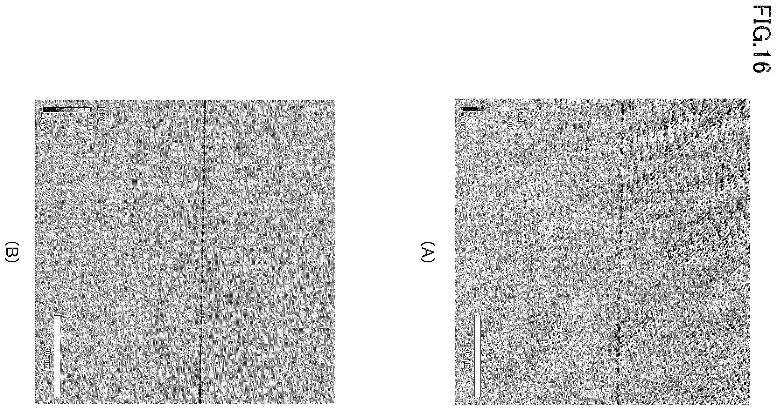

Fig. 16 is a diagram showing exemplary measurement of the internal structure with the optical measurement system according to the present embodiment. Fig. 16 shows an exemplary amplitude phase distribution at the sample plane set at 600 $\mu$m from a surface of a silicon wafer, the amplitude phase distribution being recorded with optical measurement system 1 including the reflection optical system shown in Fig. 1. A near infrared light source having a peak wavelength at 1030 nm is employed as light source 10. There is an internal crack in the sample plane.

Fig. 16 (A) shows a phase distribution of amplitude phase distribution $U_{P1}$ recorded with a single angle of illumination with illumination light being set. Fig. 16 (B) shows a phase distribution of the amplitude phase distribution (composed amplitude phase distribution $U_{SA}$) recorded with the angle of illumination with illumination light being varied to 32 angles. Specifically, Fig. 16 (B) shows an example of composed amplitude phase distribution $U_{SA}$ calculated by summing amplitude phase distributions $U_{Pi}$ (i = 32) as described above, with the amplitude phase distributions being maintained as the complex numbers.

In exemplary measurement shown in Fig. 16 (A), it can be seen that the reconstructed image has deteriorated by being affected by spectral noise caused by diffracted light included in illumination light. In contrast, as shown in Fig. 16 (B), influence by spectral noise caused by diffracted light included in illumination light can be suppressed by summing of amplitude phase distributions $U_{Pi}$, with the amplitude phase distributions being maintained as the complex numbers, and it can be seen that not only presence of a crack but also the geometry of the crack is clearly visualized.

As shown in Figs. 15 and 16, noise can be reduced and quality of the reconstructed image can be improved by summing of a plurality of amplitude phase distributions $U_{Pi}$ with the amplitude phase distributions being maintained as the complex numbers to calculate composed amplitude phase distribution $U_{SA}$.

<F. Combined Configuration>

In an example where a silicon wafer is assumed as sample S, in measurement of both of the surface geometry and the internal structure, a combined configuration which is combination of reflection optical measurement system 2 (see Fig. 9 (B)) and transmission optical measurement system 1 (see Fig. 1 (B)) can be adopted.

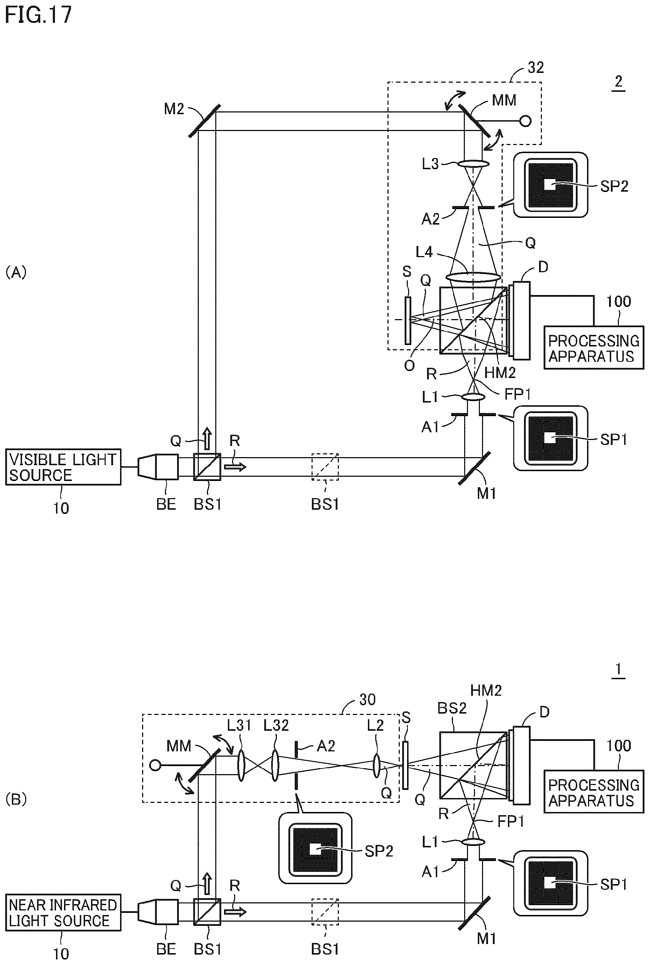

Fig. 17 is a schematic diagram showing an exemplary combined configuration of the optical measurement system according to the present embodiment. Referring to Fig. 17, the optical measurement system according to the present embodiment can be switched between a first configuration (see Fig. 17 (B)) in which an object beam hologram (first hologram) is generated from transmitted light obtained by illumination of sample S with illumination light Q and a second configuration (see Fig. 17 (A)) in which an object beam hologram (first hologram) is generated from reflected light obtained by illumination of sample S with illumination light Q.

Referring to Fig. 17 (A), since visible light does not pass through the silicon wafer, the surface geometry is measured with the use of a visible light source as light source 10 in reflection optical measurement system 2. In other words, processing apparatus 100 measures the surface geometry of sample S based on the object beam hologram recorded when the visible light source that generates visible light and Fig. 17 (A) are combined.

Referring to Fig. 17 (B), since near infrared rays pass through the silicon wafer, the internal structure is measured with the use of a near infrared light source as light source 10 in transmission optical measurement system 1. In other words, processing apparatus 100 measures the internal structure of sample S based on the object beam hologram recorded when the near infrared light source that generates near infrared rays and Fig. 17 (B) are combined.

As shown in Fig. 17, the surface geometry and the internal structure of the silicon wafer can be measured with the use of reflection optical measurement system 2 and transmission optical measurement system 1.

<G. Another Embodiment>

As described above, processing for obtaining off-axis hologram $I_{LR}$ (processing in steps S2 and S4 in Figs. 7 and 8 and processing in steps S52 and S54 in Figs. 10 and 11) is performed for improvement of accuracy of the reconstructed image, and it may be skipped when relatively high accuracy is not required.

When off-axis hologram $I_{LR}$ is not obtained, calculation processing in accordance with the expression (8) above is not performed, and complex amplitude off-axis hologram $J_{OR}$ shown in the expression (7) should only be adopted as it is as object beam hologram U(x, y).

Alternatively, the component of off-axis reference beam R (= $R_0 exp(i\phi_R)$) may be eliminated from complex amplitude off-axis hologram $J_{OR}$ shown in the expression (7), and resultant complex amplitude off-axis hologram $J_{OR}$ may be adopted as object beam hologram U(x, y). In elimination of off-axis reference beam R, complex amplitude off-axis hologram $J_{OR}$ shown in the expression (7) should only be divided by a complex conjugate of off-axis reference beam R. A distribution of off-axis reference beam R is calculated with a method of calculation from an analytical solution of a spherical wave based on physical arrangement of the point light source of off-axis reference beam R.

When off-axis hologram $I_{LR}$ is not obtained, in addition to the expression (8) above, the expressions (4), (6), and (9) are not used.

<H. Modification>

The optical systems described above are by way of example, and depending on required specifications or restriction imposed by a space or the like, any optically equivalent modification can be made. For example, a single lens may be modified to a lens assembly, or any reflection member can be employed instead of the mirror.

Though an exemplary implementation in which processing apparatus 100 performs computing processing involved with measurement of the surface geometry and/or the internal structure of sample S is exemplified in the description above, any form of implementation can be adopted without being limited as such. For example, a computing resource on a cloud may be used to perform a part or the entirety of processing for which processing apparatus 100 is responsible.

Though an example in which sample S such as a silicon wafer is measured is mainly described above, sample S to be measured is not limited. Specifically, processing for calculating composed amplitude phase distribution $U_{SA}$ by summing amplitude phase distribution $U_{Pi}$ with the amplitude phase distribution being maintained as a complex number as described above can be applied to measurement of any sample S for which improvement in SN ratio is required.

<I. Summary>

The optical measurement system according to the present embodiment can select near infrared rays or visible light as light for illumination of a sample in accordance with the type of the sample and the purpose of measurement. Since the optical measurement system has light reception sensitivity not only to visible light but also to near infrared rays by adoption of silicon-based image sensor D, replacement is not required. By adoption of such combination of the light source and the image sensor, the surface geometry and the internal structure of a sample such as a silicon wafer can be measured.

The optical measurement system according to the present embodiment measures the surface geometry and the internal structure of the sample with the use of information on a phase of an object beam. Therefore, the optical measurement system can measure the sample on the nm order, without a depth resolution (a resolution on the z axis) being restricted by a depth of focus. At this time, the internal structure of the sample can be observed at a high resolution by diffraction calculation in consideration of an index of refraction of a medium. Consequently, a defect on the nm order in the sample can also be detected.

Since the optical measurement system according to the present embodiment can reconstruct an image at any distance from an optical wave distribution obtained by digital holography, a vertical scanning mechanism or the like is not required.

The optical measurement system according to the present embodiment calculates the composed amplitude phase distribution by summing the amplitude phase distribution calculated for each manner (illumination angle) of illumination with illumination light, with the amplitude phase distribution being maintained as the complex number. By summing the amplitude phase distribution with the amplitude phase distribution being maintained as the complex number while the manner (illumination angle) of illumination with illumination light is varied, noise can be reduced and the SN ratio can be improved.

In an optical measurement apparatus according to the present embodiment, a range where a sample is illuminated with illumination light is restricted to a predetermined range, so that superimposition of a component containing information on an object beam on a light intensity component and a conjugate optical component in a Fourier space (spatial frequency domain) can be avoided. Consequently, noise due to superimposition between components can be suppressed and more accurate measurement can be realized.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

REFERENCE SIGNS LIST

1, 2 optical measurement system; 10 light source; 20 image forming optical system; 30, 32 measurement optical system; 100 processing apparatus; 102 processor; 104 main memory; 106 input device; 108 display; 110 storage; 112 operating system; 114 measurement program; 116 hologram data; 118 measurement result; 120 interface; 122 network interface; 124 medium drive; 126 recording medium; 150 off-axis hologram obtaining module; 152 illumination light hologram obtaining module; 154 object beam hologram obtaining module; 156 hologram reconstruction module; 158 amplitude phase distribution calculation module; 160 summing module; 162 object beam phase calculation module; 164 object geometry calculation module; 166 imaging module; 168 illumination angle control module; 170 user interface screen; 172 input field; 174, 176 display field; A1, A2 mask; BE beam expander; BS1, BS2 beam splitter; D image sensor; L in-line reference beam; L1, L2, L3, L4, L21, L22, L31, L32 lens; M1 mirror; MO objective lens; P pinhole; S sample; SP1, SP2 opening pattern

**Claims**

1. An optical measurement system comprising:

   a first light source configured to generate near infrared rays;
   a silicon-based image sensor; and
   an optical system comprising a beam splitter configured to divide light from the first light source into first light and second light, wherein
   the optical system is configured to record with the image sensor, a first hologram resulting from modulation with the second light, of light obtained by illumination of a sample with the first light, the second light being diverging light.

2. The optical measurement system according to claim 1, wherein

   the optical system is configured to generate the first hologram from transmitted light obtained by illumination of the sample with the first light, and
   in the optical system, a second hologram is recorded from transmitted light obtained by illumination with the first light, of a substrate instead of the sample, the substrate being included in the sample and not being an object to be measured.

3. The optical measurement system according to claim 1, wherein

   the optical system is configured to generate the first hologram from reflected light obtained by illumination of the sample with the first light, and
   in the optical system, a second hologram is recorded from reflected light obtained by illumination with the first light, of a reference plane instead of the sample.

4. The optical measurement system according to any one of claims 1 to 3, further comprising:

   a second light source configured to generate visible light; and
   a processing apparatus, wherein
   the optical system is switchable between a first configuration in which the first hologram is generated from transmitted light obtained by illumination of the sample with the first light and a second configuration in which the first hologram is generated from reflected light obtained by illumination of the sample with the first light, and
   the processing apparatus is configured to

      measure an internal structure of the sample based on the first hologram recorded when the first light source is combined with the first configuration of the optical system, and
      measure a surface geometry of the sample based on the first hologram recorded when the second light source is combined with the second configuration of the optical system.

5. The optical measurement system according to any one of claims 1 to 4, wherein
   the optical system is an off-axis holography optical system.

6. The optical measurement system according to any one of claims 1 to 5, wherein
   the optical system comprises a restriction mechanism configured to restrict a size of a range where the sample is illuminated with the first light such that a component corresponding to the first light is not superimposed on a component other than the component corresponding to the first light in a spatial frequency domain of a hologram recorded with the image sensor.

7. An optical measurement method using an optical system comprising a beam splitter configured to divide light from a first light source configured to generate near infrared rays into first light and second light, the optical measurement method comprising:

   recording with a silicon-based image sensor, a first hologram resulting from modulation with the second light, of light obtained by illumination of a sample with the first light, the second light being diverging light; and
   recording with the image sensor, a second hologram resulting from modulation of the first light with the second light while there is no sample.

8. An optical measurement system comprising:

a light source;
an optical system comprising a beam splitter configured to divide light from the light source into first light and second light;
an image sensor configured to record a hologram generated by the optical system; and
a processing apparatus configured to calculate an amplitude phase distribution at a sample plane based on a first hologram and a second hologram, the sample plane being a plane of interest regarding a sample, the first hologram resulting from modulation with the second light, of light obtained by illumination of the sample with the first light, the second hologram resulting from modulation of the first light with the second light while there is no sample, wherein
the optical system comprises a mechanism configured to change a manner of illumination with the first light, and
the processing apparatus is configured to calculate a composed amplitude phase distribution by summing the amplitude phase distribution calculated for each manner of illumination with the first light, with the amplitude phase distribution being maintained as a complex number.

9. The optical measurement system according to claim 8, wherein
the mechanism is configured to change an angle of illumination with the first light.

10. The optical measurement system according to claim 9, wherein
the mechanism changes an azimuth angle while an angle of incidence of the first light is constant.

11. The optical measurement system according to any one of claims 8 to 10, wherein
the optical system comprises a restriction mechanism configured to restrict a size of a range where the sample is illuminated with the first light such that a component corresponding to the first light is not superimposed on a component other than the component corresponding to the first light in a spatial frequency domain of a hologram recorded with the image sensor.

12. The optical measurement system according to any one of claims 8 to 11, wherein
the processing apparatus is configured to provide a user interface screen configured to receive setting of the number of manners of illumination with the first light.

13. An optical measurement method using an optical system comprising a beam splitter configured to divide light from a light source into first light and second light, the optical measurement method comprising:

recording with an image sensor, a first hologram resulting from modulation with the second light, of light obtained by illumination of a sample with the first light;
recording with the image sensor, a second hologram resulting from modulation of the first light with the second light while there is no sample;
changing a manner of illumination with the first light;
calculating an amplitude phase distribution at a sample plane which is a plane of interest regarding the sample, based on the first hologram and the second hologram for each manner of illumination with the first light; and
calculating a composed amplitude phase distribution by summing amplitude phase distributions calculated for respective manners of illumination with the first light, with the amplitude phase distributions being maintained as complex numbers.

FIG.1

(A)

(B)

FIG.2

(A)

(B)

FIG.3

FOCUS PLANE

(A)

ILLUMINATION
LIGHT Q

FOCUS PLANE

(B)

ILLUMINATION
LIGHT Q

FOCUS PLANE

(C)

ILLUMINATION
LIGHT Q

FIG.4

(A)

(B)

FIG.5

# FIG.6

REAL SPACE
(z=z_L PLANE)

POINT LIGHT
SOURCE OF
REFERENCE BEAM
$(x_R, y_R, z_R=z_L)$

(A)

FOURIER SPACE
(z=0 PLANE)

$O_0 R_0 \exp(+i(\phi_O - \phi_R))$
(THIRD TERM)

$O_0^2 + R_0^2$
(FIRST AND SECOND
TERMS)

$O_0 R_0 \exp(-i(\phi_O - \phi_R))$
(FOURTH TERM)

(B)

EP 4 404 004 A1

# FIG.7

```
( MEASUREMENT OF )
( SURFACE GEOMETRY )
            │
            ▼                    ⟋S2
SET UP OPTICAL SYSTEM SHOWN
IN FIG. 1 (A)
            │
            ▼                    ⟋S4
OBTAIN OFF-AXIS HOLOGRAM I_LR
            │
            ▼                    ⟋S6
SET UP OPTICAL SYSTEM SHOWN
IN FIG. 1 (B)
            │
            ▼
            i→N
            │
            ▼                    ⟋S8
DRIVE MOVABLE MIRROR TO SET
ONE OF A PLURALITY OF
ILLUMINATION ANGLES
            │
            ▼                    ⟋S10
OBTAIN ILLUMINATION LIGHT
HOLOGRAM Q_i(x, y) RECORDED
WITH IMAGE SENSOR
            │
            ▼                    ⟋S12
CALCULATE ILLUMINATION LIGHT
PROFILE Q_{Σi}(x, y) FROM ILLUMINATION
LIGHT HOLOGRAM Q_i(x, y)
            │
            ▼
         REPETITION
            │
            ▼                    ⟋S14
      ARRANGE SAMPLE
```

```
            i→N
            │
            ▼                    ⟋S16
DRIVE MOVABLE MIRROR TO SET
ONE OF A PLURALITY OF
ILLUMINATION ANGLES
            │
            ▼                    ⟋S18
OBTAIN OBJECT BEAM HOLOGRAM
U_i(x, y) RECORDED WITH IMAGE
SENSOR
            │
            ▼                    ⟋S20
CALCULATE RECONSTRUCTION
OBJECT BEAM HOLOGRAM U_{Σi}(x, y)
FROM OBJECT BEAM HOLOGRAM U_i(x, y)
            │
            ▼                    ⟋S22
CALCULATE OBJECT BEAM
DISTRIBUTION U_{Si}(x, y) AND
ILLUMINATION LIGHT DISTRIBUTION
Q_{Si}(x, y) AT SAMPLE PLANE BY
PROPAGATION OF RECONSTRUCTION
OBJECT BEAM HOLOGRAM U_{Σi}(x, y)
AND CORRESPONDING ILLUMINATION
LIGHT PROFILE Q_{Σi}(x, y) TO POSITION
OF SAMPLE PLANE BY PLANE WAVE
EXPANSION
            │
            ▼                    ⟋S24
CALCULATE AMPLITUDE PHASE
DISTRIBUTION U_{Pi}(x, y) AT SAMPLE
PLANE BY DIVIDING OBJECT BEAM
DISTRIBUTION U_{Si}(x, y) BY ILLUMINATION
LIGHT DISTRIBUTION Q_{Si}(x, y)
            │
            ▼
         REPETITION
            │
            ▼                    ⟋S26
CALCULATE COMPOSED AMPLITUDE
PHASE DISTRIBUTION U_{SA}(x, y) BY
SUMMING AMPLITUDE PHASE
DISTRIBUTION U_{Pi}(x, y) WITH AMPLITUDE
PHASE DISTRIBUTION BEING
MAINTAINED AS COMPLEX NUMBER
            │
            ▼                    ⟋S28
CALCULATE AMOUNT OF PHASE SHIFT
Δθ(x, y) FROM ANGLE OF DEVIATION
OF COMPOSED AMPLITUDE PHASE
DISTRIBUTION U_{SA}(x, y) AT SAMPLE PLANE
            │
            ▼                    ⟋S30
CALCULATE THICKNESS Δd(x, y) OF
SAMPLE BASED ON AMOUNT OF
PHASE SHIFT Δθ(x, y)
            │
            ▼                    ⟋S32
CALCULATE GEOMETRIC PROFILE
OF SAMPLE
            │
            ▼
          ( END )
```

# FIG.8

MEASUREMENT OF INTERNAL STRUCTURE

S2 — SET UP OPTICAL SYSTEM SHOWN IN FIG. 1 (A)

S4 — OBTAIN OFF-AXIS HOLOGRAM $I_{LR}$

S6 — SET UP OPTICAL SYSTEM SHOWN IN FIG. 1 (B)

$i \rightarrow N$

S8 — DRIVE MOVABLE MIRROR TO SET ONE OF A PLURALITY OF ILLUMINATION ANGLES

S10 — OBTAIN ILLUMINATION LIGHT HOLOGRAM $Q_i(x, y)$ RECORDED WITH IMAGE SENSOR

S12 — CALCULATE ILLUMINATION LIGHT PROFILE $Q_{\Sigma i}(x, y)$ FROM ILLUMINATION LIGHT HOLOGRAM $Q_i(x, y)$

REPETITION

S14 — ARRANGE SAMPLE

$i \rightarrow N$

S16 — DRIVE MOVABLE MIRROR TO SET ONE OF A PLURALITY OF ILLUMINATION ANGLES

S18 — OBTAIN OBJECT BEAM HOLOGRAM $U_i(x, y)$ RECORDED WITH IMAGE SENSOR

S20 — CALCULATE RECONSTRUCTION OBJECT BEAM HOLOGRAM $U_{\Sigma i}(x, y)$ FROM OBJECT BEAM HOLOGRAM $U_i(x, y)$

S22 — CALCULATE OBJECT BEAM DISTRIBUTION $U_{Si}(x, y)$ AND ILLUMINATION LIGHT DISTRIBUTION $Q_{Si}(x, y)$ AT SAMPLE PLANE BY PROPAGATION OF RECONSTRUCTION OBJECT BEAM HOLOGRAM $U_{\Sigma i}(x, y)$ AND CORRESPONDING ILLUMINATION LIGHT PROFILE $Q_{\Sigma i}(x, y)$ TO POSITION OF SAMPLE PLANE BY PLANE WAVE EXPANSION

S24 — CALCULATE AMPLITUDE PHASE DISTRIBUTION $U_{Pi}(x, y)$ AT SAMPLE PLANE BY DIVIDING OBJECT BEAM DISTRIBUTION $U_{Si}(x, y)$ BY ILLUMINATION LIGHT DISTRIBUTION $Q_{Si}(x, y)$

REPETITION

S26 — CALCULATE COMPOSED AMPLITUDE PHASE DISTRIBUTION $U_{SA}(x, y)$ BY SUMMING AMPLITUDE PHASE DISTRIBUTION $U_{Pi}(x, y)$ WITH AMPLITUDE PHASE DISTRIBUTION BEING MAINTAINED AS COMPLEX NUMBER

S34 — IMAGE INTENSITY DISTRIBUTION AND/OR PHASE DISTRIBUTION OF COMPOSED AMPLITUDE PHASE DISTRIBUTION $U_{SA}(x, y)$

END

# FIG.9

(A)

(B)

## FIG.10

**MEASUREMENT OF SURFACE GEOMETRY**

**S52** — SET UP OPTICAL SYSTEM SHOWN IN FIG. 9 (A)

**S54** — OBTAIN OFF-AXIS HOLOGRAM $I_{LR}$

**S56** — SET UP OPTICAL SYSTEM SHOWN IN FIG. 9 (B)

$i \to N$

**S58** — DRIVE MOVABLE MIRROR TO SET ONE OF A PLURALITY OF ILLUMINATION ANGLES

**S60** — OBTAIN ILLUMINATION LIGHT HOLOGRAM $Q_i(x, y)$ RECORDED WITH IMAGE SENSOR

**S62** — CALCULATE ILLUMINATION LIGHT PROFILE $Q_{\Sigma i}(x, y)$ FROM ILLUMINATION LIGHT HOLOGRAM $Q_i(x, y)$

REPETITION

**S64** — ARRANGE SAMPLE

$i \to N$

**S66** — DRIVE MOVABLE MIRROR TO SET ONE OF A PLURALITY OF ILLUMINATION ANGLES

**S68** — OBTAIN OBJECT BEAM HOLOGRAM $U_i(x, y)$ RECORDED WITH IMAGE SENSOR

**S70** — CALCULATE RECONSTRUCTION OBJECT BEAM HOLOGRAM $U_{\Sigma i}(x, y)$ FROM OBJECT BEAM HOLOGRAM $U_i(x, y)$

**S72** — CALCULATE OBJECT BEAM DISTRIBUTION $U_{Si}(x, y)$ AND ILLUMINATION LIGHT DISTRIBUTION $Q_{Si}(x, y)$ AT SAMPLE PLANE BY PROPAGATION OF RECONSTRUCTION OBJECT BEAM HOLOGRAM $U_{\Sigma i}(x, y)$ AND CORRESPONDING ILLUMINATION LIGHT PROFILE $Q_{\Sigma i}(x, y)$ TO POSITION OF SAMPLE PLANE BY PLANE WAVE EXPANSION

**S74** — CALCULATE AMPLITUDE PHASE DISTRIBUTION $U_{Pi}(x, y)$ AT SAMPLE PLANE BY DIVIDING OBJECT BEAM DISTRIBUTION $U_{Si}(x, y)$ BY ILLUMINATION LIGHT DISTRIBUTION $Q_{Si}(x, y)$

REPETITION

**S76** — CALCULATE COMPOSED AMPLITUDE PHASE DISTRIBUTION $U_{SA}(x, y)$ BY SUMMING AMPLITUDE PHASE DISTRIBUTION $U_{Pi}(x, y)$ WITH AMPLITUDE PHASE DISTRIBUTION BEING MAINTAINED AS COMPLEX NUMBER

**S78** — CALCULATE AMOUNT OF PHASE SHIFT $\Delta\theta(x, y)$ FROM ANGLE OF DEVIATION OF COMPOSED AMPLITUDE PHASE DISTRIBUTION $U_{SA}(x, y)$ AT SAMPLE PLANE

**S80** — CALCULATE HEIGHT $h(x, y)$ OF SAMPLE BASED ON AMOUNT OF PHASE SHIFT $\Delta\theta(x, y)$

**S82** — CALCULATE GEOMETRIC PROFILE OF SAMPLE

END

# FIG.11

```
   ┌─────────────────────────────┐
   (   MEASUREMENT OF            )
   (   INTERNAL STRUCTURE        )
   └─────────────────────────────┘
              │                    S52
   ┌─────────────────────────────┐
   │ SET UP OPTICAL SYSTEM SHOWN │
   │ IN FIG. 9 (A)               │
   └─────────────────────────────┘
              │                    S54
   ┌─────────────────────────────┐
   │ OBTAIN OFF-AXIS HOLOGRAM ILR│
   └─────────────────────────────┘
              │                    S56
   ┌─────────────────────────────┐
   │ SET UP OPTICAL SYSTEM SHOWN │
   │ IN FIG. 9 (B)               │
   └─────────────────────────────┘
              │
   ┌─────────────────────────────┐
   \           i→N               /
   └─────────────────────────────┘
              │                    S58
   ┌─────────────────────────────┐
   │ DRIVE MOVABLE MIRROR TO SET │
   │ ONE OF A PLURALITY OF       │
   │ ILLUMINATION ANGLES         │
   └─────────────────────────────┘
              │                    S60
   ┌─────────────────────────────┐
   │ OBTAIN ILLUMINATION LIGHT   │
   │ HOLOGRAM Qi(x, y) RECORDED  │
   │ WITH IMAGE SENSOR           │
   └─────────────────────────────┘
              │                    S62
   ┌─────────────────────────────┐
   │ CALCULATE ILLUMINATION LIGHT│
   │ PROFILE QΣi(x, y) FROM      │
   │ ILLUMINATION LIGHT HOLOGRAM │
   │ Qi(x, y)                    │
   └─────────────────────────────┘
              │
   ┌─────────────────────────────┐
   \          REPETITION         /
   └─────────────────────────────┘
              │                    S64
   ┌─────────────────────────────┐
   │      ARRANGE SAMPLE         │
   └─────────────────────────────┘
```

$I_{LR}$, $Q_i(x, y)$, $Q_{\Sigma i}(x, y)$

```
   ┌─────────────────────────────┐
   \           i→N               /
   └─────────────────────────────┘
              │                    S66
   ┌─────────────────────────────┐
   │ DRIVE MOVABLE MIRROR TO SET │
   │ ONE OF A PLURALITY OF       │
   │ ILLUMINATION ANGLES         │
   └─────────────────────────────┘
              │                    S68
   ┌─────────────────────────────┐
   │ OBTAIN OBJECT BEAM HOLOGRAM │
   │ Ui(x, y) RECORDED WITH IMAGE│
   │ SENSOR                      │
   └─────────────────────────────┘
              │                    S70
   ┌─────────────────────────────┐
   │ CALCULATE RECONSTRUCTION    │
   │ OBJECT BEAM HOLOGRAM UΣi(x, y)│
   │ FROM OBJECT BEAM HOLOGRAM Ui(x, y)│
   └─────────────────────────────┘
              │                    S72
   ┌─────────────────────────────┐
   │ CALCULATE OBJECT BEAM       │
   │ DISTRIBUTION USi(x, y) AND  │
   │ ILLUMINATION LIGHT DISTRIBUTION│
   │ QSi(x, y) AT SAMPLE PLANE BY│
   │ PROPAGATION OF RECONSTRUCTION│
   │ OBJECT BEAM HOLOGRAM UΣi(x, y)│
   │ AND CORRESPONDING ILLUMINATION│
   │ LIGHT PROFILE QΣi(x, y) TO POSITION│
   │ OF SAMPLE PLANE BY PLANE WAVE│
   │ EXPANSION                   │
   └─────────────────────────────┘
              │                    S74
   ┌─────────────────────────────┐
   │ CALCULATE AMPLITUDE PHASE   │
   │ DISTRIBUTION UPi(x, y) AT SAMPLE│
   │ PLANE BY DIVIDING OBJECT BEAM│
   │ DISTRIBUTION USi(x, y) BY   │
   │ ILLUMINATION LIGHT DISTRIBUTION│
   │ QSi(x, y)                   │
   └─────────────────────────────┘
              │
   ┌─────────────────────────────┐
   \          REPETITION         /
   └─────────────────────────────┘
              │                    S76
   ┌─────────────────────────────┐
   │ CALCULATE COMPOSED AMPLITUDE│
   │ PHASE DISTRIBUTION USA(x, y) BY│
   │ SUMMING AMPLITUDE PHASE     │
   │ DISTRIBUTION UPi(x, y) WITH │
   │ AMPLITUDE PHASE DISTRIBUTION│
   │ BEING MAINTAINED AS COMPLEX │
   │ NUMBER                      │
   └─────────────────────────────┘
              │                    S84
   ┌─────────────────────────────┐
   │ IMAGE INTENSITY DISTRIBUTION│
   │ AND/OR PHASE DISTRIBUTION OF│
   │ COMPOSED AMPLITUDE PHASE    │
   │ DISTRIBUTION USA(x, y)      │
   └─────────────────────────────┘
              │
           (  END  )
```

FIG.12

100

| | | | |
|---|---|---|---|
| 102 | 104 | 106 | 108 |
| PROCESSOR | MAIN MEMORY | INPUT DEVICE | DISPLAY |

110

| 120 | 122 | 124 |
|---|---|---|
| INTERFACE | NETWORK INTERFACE | MEDIUM DRIVE |

OS — 112

MEASUREMENT PROGRAM — 114

HOLOGRAM DATA — 116

MEASUREMENT RESULT — 118

126

IMAGE SENSOR D

FIG.13

100

OFF-AXIS HOLOGRAM OBTAINING MODULE — 150

ILLUMINATION LIGHT HOLOGRAM OBTAINING MODULE — 152

OBJECT BEAM HOLOGRAM OBTAINING MODULE — 154

IMAGE SENSOR

STATUS SIGNAL

$Q_i(x, y)$

$U_i(x, y)$

HOLOGRAM RECONSTRUCTION MODULE — 156

$Q_{si}(x, y)$

$U_{si}(x, y)$

AMPLITUDE PHASE DISTRIBUTION CALCULATION MODULE — 158

$U_{pi}(x, y)$

SUMMING MODULE — 160

$U_{SA}$

OBJECT BEAM PHASE CALCULATION MODULE — 162

$\Delta \theta(x, y)$

OBJECT GEOMETRY CALCULATION MODULE — 164

MEASUREMENT RESULT

IMAGING MODULE — 166

MEASUREMENT RESULT

ILLUMINATION ANGLE CONTROL MODULE — 168

SETTING

ILLUMINATION ANGLE

MOVABLE MIRROR MM

36

FIG.14

/ 170

THE NUMBER OF
ILLUMINATION ANGLES

| 32 | ~172 |

SN RATIO

| 5.6 TIMES | ~174 |

NECESSARY
PROCESSING TIME

| 10sec | ~176 |

FIG.15

(A)

(B)

(C)

(D)

FIG.16

(A)

(B)

# FIG.17

(A)

(B)

## INTERNATIONAL SEARCH REPORT

| International application No. |
| --- |
| **PCT/JP2021/034111** |

| A. | CLASSIFICATION OF SUBJECT MATTER |
| --- | --- |

*G03H 1/08*(2006.01)i; *G01B 11/24*(2006.01)i; *G01N 21/45*(2006.01)i; *G01N 21/88*(2006.01)i
FI:    G01N21/45 A; G01N21/88 J; G03H1/08; G01B11/24 D

According to International Patent Classification (IPC) or to both national classification and IPC

| B. | FIELDS SEARCHED |
| --- | --- |

Minimum documentation searched (classification system followed by classification symbols)

G03H1/08; G01B11/24; G01N21/00-G01N21/61; G01N21/88; G01B9/00; G02B21/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2014/054776 A1 (UNIVERSITY OF HYOGO) 10 April 2014 (2014-04-10) paragraphs [0011]-[0015], [0034]-[0058], [0066]-[0075], [0107], [0126], fig. 1-8 | 1, 3, 5-8, 13 |
| Y | | 9-12 |
| Y | WO 2019/044336 A1 (UNIVERSITY OF HYOGO) 07 March 2019 (2019-03-07) paragraphs [0022]-[0091], fig. 4-7 | 9-12 |
| X | JP 2013-178484 A (CANON INC) 09 September 2013 (2013-09-09) paragraphs [0021]-[0030], [0073]-[0074], fig. 1, 9 | 1, 5, 7 |
| Y | | 2, 4 |
| Y | JP 2007-524075 A (MASSACHUSETTS INSTITUTE OF TECHNOLOGY) 23 August 2007 (2007-08-23) paragraph [0205] | 2, 4 |
| Y | US 2008/0137933 A1 (UNIVERSITY OF SOUTH FLORIDA) 12 June 2008 (2008-06-12) paragraphs [0180]-[0182], fig. 12 | 4 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 November 2021** | **30 November 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 404 004 A1

**INTERNATIONAL SEARCH REPORT**

International application No.

**PCT/JP2021/034111**

**C.    DOCUMENTS CONSIDERED TO BE RELEVANT**

| Category* | Citation of document, with indication, where appropriate, of the relevant passages | Relevant to claim No. |
|---|---|---|
| A | JP 2012-530929 A (ASML NETHERLANDS B.V) 06 December 2012 (2012-12-06)<br>entire text, all drawings | 1-13 |
| A | WO 2015/064088 A1 (UNIVERSITY OF HYOGO) 07 May 2015 (2015-05-07)<br>entire text, all drawings | 1-13 |

Form PCT/ISA/210 (second sheet) (January 2015)

42

EP 4 404 004 A1

**INTERNATIONAL SEARCH REPORT**
Information on patent family members

International application No.

**PCT/JP2021/034111**

| Patent document cited in search report | | | Publication date (day/month/year) | Patent family member(s) | | | Publication date (day/month/year) |
|---|---|---|---|---|---|---|---|
| WO | 2014/054776 | A1 | 10 April 2014 | US paragraphs [0013]-[0017], [0071]-[0097], [0104]-[0113], [0152], [0177], fig. 1-8 EP | 2015/0268628 2905645 | A1 A1 | |
| WO | 2019/044336 | A1 | 07 March 2019 | US paragraphs [0078]-[0139], fig. 4A-7C EP | 2020/0264559 3677969 | A1 A1 | |
| JP | 2013-178484 | A | 09 September 2013 | US paragraphs [0030]-[0039], [0071]-[0072], fig. 1, 9 | 2013/0148182 | A1 | |
| JP | 2007-524075 | A | 23 August 2007 | US paragraph [0253] WO EP CA | 2005/0057756 2005/001445 1644720 2529942 | A1 A2 A2 A1 | |
| US | 2008/0137933 | A1 | 12 June 2008 | WO | 2007/002898 | A2 | |
| JP | 2012-530929 | A | 06 December 2012 | US entire text, all drawings WO NL TW CN KR | 2012/0081684 2010/149403 2004539 201113514 102460129 10-2012-0039659 | A1 A1 A A A A | |
| WO | 2015/064088 | A1 | 07 May 2015 | US entire text, all drawings EP | 2016/0259297 3065001 | A1 A1 | |

Form PCT/ISA/210 (patent family annex) (January 2015)

43

**REFERENCES CITED IN THE DESCRIPTION**

**Patent documents cited in the description**

- JP 2011033449 A
- WO 2012005315 A

- WO 2020045584 A

**Non-patent literature cited in the description**

- **TORAY.** *Wafer internal defect inspection system "IN-SPECTRA® IR" Series,* 06 September 2021, URL:https://www.toray-eng.com/tasmit/products/measuring/mea_020.html